# EUROPÄISCHE PATENTSCHRIFT

(11) **EP 4 294 850 B1**
(45) Veröffentlichungstag und Bekanntmachung des Hinweises auf die Patenterteilung: **27.11.2024**
(21) Anmeldenummer: 22705805.4
(22) Anmeldetag: 15.02.2022
(51) Int. Cl.: C08F 6/00, C08L 51/04, C08L 25/12, F26B 3/08

(54) **VERFAHREN ZUR HERSTELLUNG EINER THERMOPLASTISCHEN FORMMASSE ENTHALTEND EIN THERMOPLASTISCHES COPOLYMER UND EIN PFROPFCOPOLYMER**
PROCESS FOR PRODUCING A THERMOPLASTIC MOULDING COMPOUND COMPRISING A THERMOPLASTIC COPOLYMER AND A GRAFT COPOLYMER
PROCÉDÉ DE PRODUCTION D'UN COMPOSÉ DE MOULAGE THERMOPLASTIQUE COMPRENANT UN COPOLYMÈRE THERMOPLASTIQUE ET UN COPOLYMÈRE GREFFÉ

(30) Priorität: 16.02.2021 EP 21157467
(43) Veröffentlichungstag der Anmeldung: 27.12.2023
(73) Patentinhaber: INEOS Styrolution Group GmbH, 60325 Frankfurt (DE)
(72) Erfinder: FISCHER, Wolfgang, 69124 Heidelberg (DE)
(74) Vertreter: Jacobi, Markus Alexander
(86) Internationale Anmeldenummer: PCT/EP2022/053705
(87) Internationale Veröffentlichungsnummer: WO 2022/175283

(56) Entgegenhaltungen:
- WO-A1-2018/060111
- CN-A- 1 508 501

## Beschreibung

Die Erfindung betrifft ein Verfahren zur Herstellung einer thermoplastischen Formmasse enthaltend mindestens ein thermoplastisches Copolymer A und mindestens ein Pfropfcopolymer B, welches die Regelung einer kontinuierlichen Trocknung des Pfropfcopolymers B mit gegebenenfalls variablem Wassergehalt und/oder variablem Massenstrom ermöglicht, so dass eine konstante Restfeuchte und ein konstanter Gehalt an Restmonomeren nach der Trocknung erzielt werden. Weiterhin kann der benötigte Energieaufwand, der zur Erzielung konstanter Produkteigenschaften notwendig ist, reduziert werden, da ein schwankender Wassergehalt und Massenstrom des kontinuierlich verarbeiteten Pfropfcopolymers B in der Regelung berücksichtigt sind. Zudem weisen die erfindungsgemäß hergestellten Formmassen insbesondere einen verminderten Gehalt an Restmonomeren auf. Ebenfalls Gegenstand der Erfindung sind thermoplastische Formmassen, die mittels des erfindungsgemäßen Verfahrens hergestellt werden können, sowie Formteile hergestellt aus den thermoplastischen Formmassen.

Bekannte Beispiele für thermoplastische Formmassen, die mindestens ein thermoplastisches Copolymer A und mindestens ein Pfropfcopolymer B enthalten, basieren z.B. auf Styrol-Acrylnitril-Copolymeren (SAN) oder Methylstyrol-Acrylnitril-Copolymeren (z.B. Alpha-Methylstyrol-Acrylnitril-Copolymere, AMSAN) sowie Acrylnitril-Butadien-Styrol (ABS) und Acrylnitril-Butadien-Methylstyrol. Diese werden seit Jahren in großen Mengen als thermoplastische Formmassen für die Herstellung von Formteilen aller Art eingesetzt und können durch Einarbeiten von Pfropfkautschuken, beispielsweise vernetztem Polyacrylat-Kautschuken beziehungsweise gepfropften Polybutadien-Kautschuken, im Hinblick auf eine bessere Schlagzähigkeit modifiziert werden. Grundsätzlich kann die Herstellung von solchen schlagzäh-modifizierten Formmassen durch Pfropfpolymerisation von Styrol und Acrylnitril in Gegenwart eines Pfropfkautschuks, insbesondere Polybutadien-Kautschuks, und/oder durch nachträgliches Abmischen eines Pfropfkautschs (Pfropflatex) mit einer separat hergestellten polymeren Styrol-Acrylnitril-Matrix erfolgen. Dabei kann das Eigenschaftsspektrum der Formmassen und der daraus hergestellten Formteile in weiten Bereichen variiert werden.

Es ist üblich, die mittlere Teilchengröße des Pfropfkautschuks gezielt einzustellen, da die Größe der Kautschukpartikel einen wesentlichen Einfluss auf die physikalischen Eigenschaften der späteren thermoplastischen Formmasse hat.

Dies wird z.B. in WO 2015/078751 beschrieben.

Häufig wird das Pfropfcopolymer (Pfropfkautschuk) nach der Pfropfpolymerisation durch Zugabe einer Salz- und/oder Säurelösung als Koagulierungsmittel gefällt, gewaschen und getrocknet. In EP-A 0734825 wird die Entwässerung und Trocknung von ASA-Pfropfcopolymeren in einem Extruder beschrieben.

Neben den vorteilhaften mechanischen Eigenschaften von thermoplastischen Formmassen, wie hoher Zähigkeit (Schlagzähigkeit, Kerbschlagzähigkeit), hoher Elastizität (E-Modul), guter Verarbeitbarkeit (thermoplastische Fließfähigkeit, insbesondere ein geeigneter Schmelzflussindex, MVR) ist eine hohe Wärmeformbeständigkeit von Bedeutung.

Weiterhin ist es wünschenswert, thermoplastische Formmassen mit einem möglichst niedrigen Gehalt an Restmonomeren, insbesondere an Acrylnitril und/oder Styrol, zu erhalten. Im Stand der Technik sind verschiedene Verfahren beschrieben, durch die der Gehalt an Monomeren im Polymer reduziert werden soll. Das Dokument DE-102007029010 beschreibt ein Verfahren zum Compoundieren von zwei Polymeren, beispielsweise ABS und PC, unter Verwendung eines Extruders mit Entgasungszonen, wobei ein inertes Schleppmittel eingesetzt wird. Das Dokument DE-A 3840293 beschreibt ein Verfahren zum Entfernen von niedermolekularen Verbindungen aus Polymeren, wobei ein inertes Extraktionsgas in einem Extruder mit dem Polymer vermischt wird.

WO 2010/094416 beschreibt ein Verfahren zur Herstellung einer Polymerzusammensetzung, z.B. PC/ABS-Blends, mit einem reduzierten Anteil an flüchtigen Verbindungen, wobei die Polymere, welche einen gewissen Wasseranteil aufweisen, in einem Extruder mit spezieller Entgasungszone aufgeschmolzen werden. EP-A 1415 693 beschreibt ein Verfahren, bei dem eine Mischung aus Polymer, Restmonomeren, Oligomeren und Lösungsmittel durch mehrere Düsen in einen Entgasungsbehälter extrudiert wird.

Nachteilig ist, dass die beschriebenen Verfahren zur Reduzierung des Gehalts an Restmonomeren oftmals einen hohen apparativen Aufwand, den Einsatz eines Extraktionsgases und das erneute Aufschmelzen des Polymers nach der Herstellung erfordern.

WO 2017/093468 und WO 2018/060111 betreffen die Verwendung eines Fließbetttrockners und/oder eines Stromtrockners zur Herstellung von ABS-Formmassen beziehungsweise ASA-Formmassen, wobei auf eine Regelung des Trocknungsverfahrens nicht eingegangen wird. Auch in WO 2020/043690 und US 2003/0236350 ist eine Polymertrocknung in einer Wirbelschicht erwähnt ohne Hinweise auf eine geeignete Regelung eines kontinuierlichen Trocknungsverfahrens zu geben.

US 2008/0067137 beschreibt eine Vorrichtung, die sowohl zum Filtern als auch zum Trocknen eingesetzt werden kann.

Bei der Trocknung liegt eine Wirbelschicht vor, deren räumliche Ausprägung in Abhängigkeit von dem zugeführten Trocknungsgasstrom variiert.

EP-A 3517551 offenbart ein Verfahren zur Trocknung von Polymeren, wobei ein Restmonomeren-Gehalt in Abhängigkeit verschiedener Parameter wie einem Massenfluss eines Trocknungsgases und des zu trocknenden Polymers beschrieben wird, wobei ein wechselhafter Wassergehalt des zu trocknenden Polymers nicht berücksichtigt wird.

Es besteht ein Bedarf, ein einfaches und kostengünstiges Herstellungsverfahren für thermoplastische Formmassen bereitzustellen, wobei die erhaltenen Formmassen gute mechanische Eigenschaften aufweisen und wobei das getrocknete Zwischenprodukt einen konstanten Feuchtegehalt aufweist und ein konstant niedriger Gehalt an Restmonomeren gewährleistet ist.

Zudem soll der Gehalt an Restmonomeren verringert werden, ohne dass ein zusätzlicher, aufwändiger apparativer Entgasungs-Extrudierschritt notwendig ist. Insbesondere soll der Gesamtgehalt an Restmonomeren, insbesondere Reststyrol, also monomerem Styrol, zum Beispiel in einem ASA-Pfropfcopolymer auf einen Wert unter 500 ppm, bevorzugt unter 400 ppm, besonders bevorzugt unter 300 ppm, und der Gesamtgehalt an Restacrylnitril, also monomerem Acrylnitril, zum Beispiel in einem ASA-Pfropfcopolymer auf einen Wert unter 100 ppm, bevorzugt unter 75 ppm, besonders bevorzugt unter 50 ppm, jeweils bezogen auf das trockene ASA-Pfropfcopolymer, vermindert werden und der Gehalt an Restmonomeren, insbesondere Reststyrol, also monomerem Styrol, in einem ABS-Pfropfcopolymer auf einen Wert ≤ 2000 ppm, bevorzugt ≤ 1000 ppm, jeweils bezogen auf das trockene ABS-Pfropfcopolymer, vermindert werden.

Unter dem trockenen Pfropfcopolymer, wie dem trockenen Pfropfcopolymer B, wird insbesondere die Trockenmasse des Pfropfcopolymer bzw. des Pfropfcopolymers B verstanden.

Es wurde gefunden, dass besonders vorteilhafte thermoplastische Formmassen erhalten werden, wenn das Trocknen des Pfropfcopolymers B (Pfropfkautschuks), insbesondere nach dem Fällen, in einem Fließbetttrockner, der auch als Wirbelbetttrockner bezeichnet wird, erfolgt und dieser in einer kontinuierlichen Fahrweise so geregelt ist, dass ein Wassergehalt beziehungsweise Restmonomerengehalt in dem getrockneten Pfropfcopolymer B unabhängig von dem Wassergehalt in dem der Trocknung zugeführten Pfropfcopolymer B konstant ist.

Es wurde zudem gefunden, dass sich eine schnelle und gleichmäßige Trocknung, wie sie in einem Fließbetttrockner, insbesondere bei entsprechend geregelten Temperaturen und Volumenströmen des Trocknungsgases, das zum Beispiel Luft oder Stickstoff ist, erreicht werden kann, vorteilhaft auf die thermoplastischen Formmassen beziehungsweise daraus hergestellte Formteile auswirkt.

Es wurde ferner festgestellt, dass durch die erfindungsgemäße Trocknung des Pfropfcopolymers B der Gehalt an Restmonomeren, insbesondere der Gehalt an Acrylnitril und/oder Styrol in den ASA-Formmassen beziehungsweise insbesondere der Gehalt an Acrylnitril, gegebenenfalls 4-Vinylcyclohexen und Styrol in den ABS-Formmassen, deutlich reduziert werden kann. Die mittels des erfindungsgemäßen Verfahrens herstellten thermoplastischen Formmassen zeichnen sich daher durch einen sehr geringen Gehalt an Restmonomeren aus, ohne dass ein zusätzlicher Entgasungs-Extrudierschritt notwendig ist. Weiterhin weisen die thermoplastischen Formmassen eine hohe Konstanz über die Zeit bezüglich der Produkteigenschaften auf.

Es wurde insbesondere gefunden, dass der Gehalt an Restmonomeren deutlich gesenkt werden kann, wenn das Pfropfcopolymer B nach dem Erreichen eines Wassergehalts von 2 Gew.-%, insbesondere nach Erreichen eines Wassergehalts von 1 Gew.-%, insbesondere bezogen auf das gesamte Pfropfcopolymer B, 5 bis 40 Minuten weiter, bei insbesondere im Wesentlichen konstanter Temperatur, mit dem Trocknungsgas in Kontakt beziehungsweise in dem Fließbett bleibt, also Schritt c) des erfindungsgemäßen Verfahrens im Wesentlichen fortgesetzt wird, wobei das Trocknungsgas bevorzugt eine Zuführtemperatur T_{G,zu} in einem Bereich von 45°C bis 80°C, weiter bevorzugt von 50° bis 70°C aufweist. Insbesondere werden hierbei die übrigen Eigenschaften, insbesondere mechanische Eigenschaften, der thermoplastischen Formmasse nicht nachteilig beeinflusst.

Weiterhin wird mit dem erfindungsgemäßen Verfahren eine hohe Produktkonstanz und Produktqualität, die sich insbesondere durch einen konstanten und niedrigen Restmonomergehalt sowie einen konstanten Wassergehalt auszeichnet, erzielt. Insbesondere ist dies auch bei schwankendem Restfeuchte-Gehalten des entwässerten Pfropfcopolymers B sowie bei gleichzeitig schwankendem Durchsatz möglich.

Fließbetttrockner sind Geräte, die absatzweise oder kontinuierlich, insbesondere kontinuierlich, betrieben werden können. Fließbetttrockner werden zum Beispiel in Krischer/Kröll, Trocknungstechnik (Zweiter Band, Trockner und Trocknungsverfahren, Springer-Verlag, 1959, S. 275-282) beschrieben. Es ist zudem möglich Fließbetttrockner einzusetzen, die einen oder mehrere ins Fließbett integrierte Wärmetauscher aufweisen. Durch den Einsatz von Wärmetauschern kann insbesondere die nötige Trocknungsenergie ins Fließbett eingebracht werden.

Solche Fließbetttrockner sind beispielsweise in D. Gehrmann, et al., Trocknungstechnik in der Lebensmittelindustrie (Behr's Verlag GmbH & Co. KG, 1. Auflage 2009, Abschnitt 2.5.3, Statische Wirbelschichttrockner, S. 143-145) beschrieben. Fließbetttrockner können mit verschiedenen Trocknungsgasen wie Luft oder Stickstoff betrieben werden.

Gegenstand der Erfindung ist ein Verfahren zur Herstellung einer thermoplastischen Formmasse enthaltend mindestens ein thermoplastisches Copolymer A und mindestens ein Pfropfcopolymer B, umfassend folgende Schritte:
a) Fällen des mindestens einen Pfropfcopolymers B nach einer Emulsionspolymerisation durch Zugabe einer Fällungslösung;
b) Entwässern des gefällten Pfropfcopolymers B, bevorzugt mittels Zentrifugation und/oder Filtration, wobei ein entwässertes Pfropfcopolymer B mit einem Wassergehalt von kleiner oder gleich 50 Gew.-%, insbesondere bezogen auf das gesamte entwässerte Pfropfcopolymer B, erhalten wird;
c) kontinuierliches Trocknen des entwässerten Pfropfcopolymers B, wobei ein Trocknungsgas und das entwässerte Pfropfcopolymer B zugeführt werden, das entwässerte Pfropfcopolymer B durch das Trocknungsgas bewegt wird und eine Wirbelschicht bildet, das Trocknungsgas eine Zuführtemperatur T_{G,zu} im Bereich von 50°C bis 160°C aufweist und getrocknetes Pfropfcopolymer B und ein Abgas abgeführt werden, wobei
   i. eine Anfangstemperatur Tₑᵢₙ der Wirbelschicht bei Zufuhr des entwässerten Pfropfcopolymers B gemessen wird,
   ii. eine Endtemperatur Tₐᵤₛ der Wirbelschicht bei Abfuhr des getrockneten Pfropfcopolymers B und/oder des Abgases gemessen wird,
   iii. eine Differenz ΔTᵢₛₜ zwischen der gemessenen Endtemperatur Tₐᵤₛ und der gemessen Anfangstemperatur Tₑᵢₙ gebildet wird und die Differenz ΔTᵢₛₜ mit einem Sollwert ΔTₛₒₗₗ, der insbesondere mindestens 2°C beträgt, verglichen wird und
   iv. die Endtemperatur Tₐᵤₛ angepasst wird, indem
      - ein Massenstrom an zugeführtem Trocknungsgas und/oder die Zuführtemperatur T_{G,zu} des Trocknungsgases erhöht wird, wenn die Differenz ΔTᵢₛₜ kleiner als der Sollwert ΔTₛₒₗₗ ist oder
      - ein Massenstrom an zugeführtem Trocknungsgas und/oder die Zuführtemperatur T_{G,zu} des Trocknungsgases verringert wird, wenn die Differenz ΔTᵢₛₜ größer als der Sollwert ΔTₛₒₗₗ ist;
d) gegebenenfalls Vermischen des thermoplastischen Copolymers A, des getrockneten Pfropfcopolymers B, optional weiterer polymerer Komponente(n) C und optional weiterer Komponente(n) K.

Durch das erfindungsgemäße Verfahren wird mit der kontinuierlichen Trocknung eines entwässerten Pfropfcopolymers B, insbesondere mit variablem Wassergehalt und/oder variablem Massenstrom, ein getrocknetes Pfropfcopolymer B mit konstantem Wassergehalt beziehungsweise Restmonomerengehalt erhalten.

Ferner zeichnen sich die mittels des erfindungsgemäßen Verfahrens erhaltenen thermoplastischen Formmassen dadurch aus, dass sie einen konstanten und geringen Gehalt an Restmonomeren, einen konstanten Gehalt an Pfropfcopolymer B und gute mechanische Eigenschaften aufweisen.

Gegenstand der Erfindung ist zudem eine thermoplastische Formmasse erhältlich durch das erfindungsgemäße Verfahren sowie ein Formteil hergestellt aus der thermoplastischen Formmasse.

Bevorzugt basiert das Pfropfcopolymer B auf einem Acrylester-Styrol-Acrylnitril-Copolymer oder auf einem Polybutadien. Weiter bevorzugt ist die thermoplastische Formmasse eine ASA-Formmasse, insbesondere enthaltend das Pfropfcopolymer B basierend auf einem Acrylester-Styrol-Acrylnitril-Copolymer, oder eine ABS-Formmasse, insbesondere enthaltend das Pfropfcopolymer B basierend auf einem Polybutadien.

Unter thermoplastischen Formmassen im Sinne der vorliegenden Erfindung sind bevorzugt Formmassen enthaltend mindestens 10 Gew.-%, bevorzugt mindestens 60 Gew.-%, besonders bevorzugt mindestens 95 Gew.-%, des thermoplastischen Copolymers A und des Pfropfcopolymers B (in der Summe) zu verstehen. Bevorzugt enthält die thermoplastische Formmasse ausschließlich das thermoplastische Copolymer A und das Pfropfcopolymer B als polymere Komponenten. Thermoplastische Formmassen im Sinne der vorliegenden Erfindung sind auch Polymerblends enthaltend das thermoplastische Copolymer A und das Pfropfcopolymer B und mindestens eine weitere polymere Komponente C, insbesondere ein kautschukfreies nicht aus Vinylmonomeren aufgebautes Thermoplastharz, beispielsweise ein Polykondensat, bevorzugt ausgewählt aus Polycarbonaten, Polyestercarbonaten, Polyestern und Polyamiden.

Daneben kommen auch Derivate oder Varianten von SAN-Polymeren, ABS oder ASA in Betracht, wie solche auf der Basis von alpha-Methylstyrol oder Methacrylat oder solche, die weitere Co-Monomere umfassen, beispielsweise das sogenannte Methylmethacrylat-Acrylnitril-Butadien-Styrol (MABS). Es können auch Mischungen von zwei oder mehreren unterschiedlichen Styrol-Copolymeren eingesetzt werden. Des Weiteren kommen kautschukmodifizierte Styrol-Copolymere in Betracht, die ganz oder teilweise auf anderen Kautschuken basieren, wie Ethylen-Butadien-Kautschuken oder Silikonkautschuken.

Bevorzugt werden auch Mischungen ("Blends") der genannten Polymere mit Polyamiden, Polybutylenterephthalaten und/oder Polycarbonaten.

Insbesondere werden als Pfropfcopolymer B partikel-förmige Kautschuke verwendet. Besonders bevorzugt sind solche Kautschuke, die eine aufgepfropfte Hülle aus anderen, in der Regel nicht elastomeren Polymeren aufweisen.

Eine Ausführungsform der Erfindung besteht in einem Verfahren, bei dem als Pfropfcopolymer B zwei- oder mehrstufig aufgebaute Pfropfkautschuke verwendet werden, bei denen die elastomeren Grund- oder Pfropfstufen durch Polymerisation eines oder mehrerer der Monomeren Butadien, Isopren, Chloropren, Styrol, Alkylstyrol, C₁-bis C₁₂-Al-kylester der Acrylsäure oder der Methacrylsäure sowie geringer Mengen anderer, auch vernetzender Monomeren erhalten werden, und bei denen die harten Pfropfstufen aus einem oder mehreren der Monomeren Styrol, Alkylstyrol, Acrylnitril und Methylmethacrylat polymerisiert werden.

Bevorzugt sind Pfropfcopolymer B - Partikel aus Polymeren auf Basis von Butadien/Styrol/Acrylnitril, n-Butylacrylat/Styrol/Acrylnitril, Butadien/n-Butylacrylat/Styrol/Acrylnitril, n-Butylacrylat/Methylmethacrylat, n-Butylacrylat/Styrol/Methylmethacrylat, Butadien/Styrol/Acrylnitril/Methylmethacrylat und/oder Butadien/n-Butylacrylat/ Methylmethacrylat/Styrol/ Acrylnitril aufgebaut. In Kern oder Schale können bis zu 10 Gew.-% funktionelle Gruppen tragende, polare Monomere oder auch vernetzend wirkende Monomere einpolymerisiert sein.

Bevorzugt handelt es sich bei dem thermoplastischen Copolymer A um ein kautschukfreies Copolymer A. Weiter bevorzugt werden als thermoplastisches Copolymer A Styrol-Acrylnitril- (SAN)-Copolymere, Polystyrol, Polymethylmethacrylat, Polyvinylchlorid oder Mischungen dieser Polymere eingesetzt. Dabei sind SAN-Polymere, Polymethylmethacrylat (PMMA) oder Mischungen dieser Polymere bevorzugt.

Weiterhin können als thermoplastisches Copolymer A auch Polycarbonate, Polyalkylenterephthalate wie Polybutylenterephthalat und Polyethylenterephthalat, Polyoxymethylen, Polymethylmethacrylat, Polyphenylensulfid, Polysulfone, Polyethersulfone und Polyamide, und Mischungen dieser Thermoplasten, eingesetzt werden.

Bei allen genannten thermoplastischen Copolymeren A kann das Styrol ganz oder teilweise durch alpha-Methylstyrol, oder durch kernalkylierte Styrole, oder durch Acrylnitril ersetzt sein. Von den zuletzt genannten thermoplastischen Copolymeren A sind solche auf Basis von alpha-Methylstyrol/Acrylnitril und/oder Styrol/Methylmethacrylat bevorzugt.

Bevorzugte Beispiele für das Pfropfcopolymer B sind Polymere von konjugierten Dienen wie Butadien, mit einer äußeren Pfropfhülle auf Basis einer vinylaromatischen Verbindung, wie etwa SAN-Copolymeren. Gleichfalls bevorzugt sind Pfropfkautschuke auf Basis von vernetzten Polymerisaten aus C₁-bis C₁₂-Alkylestern der Acrylsäure wie n-Butylacrylat, Ethylhexylacrylat, einstufig oder mehrstufig gepfropft mit Polymeren auf der Grundlage vinylaromatischer Verbindungen wie Styrol oder SAN-Copolymeren. Möglich sind auch Pfropfkautschuke, die im Wesentlichen ein Copolymerisat aus konjugierten Dienen und C₁-bis C₁₂-Alkylacrylaten, beispielsweise ein Butadien-n-Butylacrylat-Copolymerisat, und eine oder mehrere äußere Pfropfstufen aus SAN-Copolymer, Polystyrol oder PMMA enthalten. Die Herstellung solcher Pfropfkautschuke nach den üblichen Verfahren, insbesondere durch Emulsions-oder Suspensionspolymerisation, ist bekannt.

Pfropfkautschuke auf Basis von SAN-gepfropftem Polybutadien sind beispielsweise in DE 24 27 960 und EP-A 258 741 beschrieben, solche auf Basis von SAN-gepfropftem Poly-n-Butylacrylat in DE-AS 12 60 135 und DE-OS 31 49 358. Näheres zu SAN-gepfropften Poly(Butadien/n-Butylacrylat) -Mischkautschuken ist der EP-A 62 901 zu entnehmen.

Als thermoplastisches Copolymer A werden im Falle der im letzten Absatz genannten Pfropfkautschuke Copolymere aus Styrol und Acrylnitril verwendet. Sie sind bekannt und zum Teil auch handelsüblich und haben in der Regel eine Viskositätszahl VZ (ermittelt nach DIN 53 726 bei 25°C, 0,5 Gew.-% in Dimethylformamid) von 40 ml/g bis 160 ml/g, entsprechend einer mittleren Molmasse Mw von etwa 40000 g/mol bis 2000000 g/mol.

Bevorzugt wird das thermoplastische Copolymer A durch kontinuierliche Massepolymerisation beziehungsweise Lösungspolymerisation hergestellt, wobei in einem zusätzlichen Arbeitsschritt das thermoplastische Copolymer A von der flüssigen Phase getrennt wird. Einzelheiten der Herstellungsverfahren sind z.B. im Kunststoffhandbuch, Hrg. R. Vieweg und G. Daumiller, Bd. V "Polystyrol", Carl-Hanser-Verlag, München, 1969, S. 118 - 124 beschrieben.

Ist das Pfropfcopolymer B ein SAN-gepfropftes Polybutadien, so entsteht durch Einarbeiten des SAN eine Formmasse, die als ABS (Acrylnitril/Butadien/Styrol) bekannt ist. Wird als Pfropfcopolymer B ein SAN-gepfropftes Alkylacrylat verwendet, so entstehen sogenannte ASA-Formmassen (Acrylnitril/Styrol/Acrylat).

In einer Ausführungsform werden Pfropfcopolymere B auf Basis von Polydienen und/oder Polyalkylacrylaten sowie SAN und/oder PMMA eingesetzt, die aus zwei oder mehr Pfropfstufen aufgebaut sind. Beispiele für solche vielstufigen Pfropfpartikel sind Teilchen, die als Kern ein Polydien und/oder Polyalkylacrylat, als erste Hülle ein Polystyrol oder SAN-Polymer und als zweite Hülle ein anderes SAN-Polymer mit einem veränderten Gewichtsverhältnis Styrol : Acrylnitril enthalten, oder auch Teilchen aus einem Polystyrol-, Polymethylmethacrylat- oder SAN-Polymerisat-Kern, einer ersten Hülle aus Polydien und/oder Polyalkylacrylat und einer zweiten Hülle aus Polystyrol, Polymethylmethacrylat oder SAN-Polymer. Weitere Beispiele sind Pfropfkautschuke aus einem Polydienkern, einer oder mehreren Polyalkylacrylathüllen und einer oder mehreren Polymer-Hüllen aus Polystyrol, Polymethylmethacrylat oder SAN-Polymer oder analog aufgebaute Pfropfkautschuke mit Acrylatkern und Polydienhüllen.

Ferner sind Pfropfcopolymere B mit mehrstufigem Kern-Schale-Aufbau aus vernetztem Alkylacrylat, Styrol, Methylmethacrylat und einer äußeren Schale aus PMMA möglich. Solche mehrstufigen Pfropfkautschuke sind z.B. in DE-OS 31 49 046 beschrieben. Pfropfkautschuke auf Basis von n-Butylacrylat/Styrol/Methylmethacrylat mit einer Hülle aus PMMA werden z.B. in EP-A 512 333 beschrieben, wobei auch jeder andere dem Stand der Technik entsprechende Aufbau solcher Pfropfkautschuke möglich ist. Derartige Kautschuke werden als schlagzäh machende Komponente für Polyvinylchlorid und bevorzugt für schlagzähes PMMA eingesetzt.

Als thermoplastisches Copolymer A werden bevorzugt wiederum die genannten SAN-Copolymere und/oder PMMA verwendet. Ist das Pfropfcopolymer B ein mehrschalig aufgebautes Kern/Schale-Polymer auf Basis von n-Butylacrylat/Methylmethacrylat, und das thermoplastische Copolymer A PMMA, so erhält man demnach schlagzähes PMMA.

Der mittlere Durchmesser des partikelförmigen Pfropfcopolymers B beträgt bevorzugt 0,05 µm bis 20 µm. Handelt es sich um die allgemein bekannten Pfropfkautschuke kleinen Durchmessers, so beträgt der mittlere Durchmesser bevorzugt 80 nm bis 300 nm und besonders bevorzugt 90 nm bis 200 nm.

Bei großteiligen Pfropfkautschuken ist der mittlere Durchmesser bevorzugt 300 nm bis 900 nm, weiter bevorzugt 350 nm bis 750 nm und insbesondere 350 nm bis 650 nm. Bevorzugte thermoplastische Copolymere A sind auch in dieser Ausführungsform die genannten SAN-Copolymere, Polystyrol und/oder PMMA.

Bei der Komponente C handelt es sich um weitere Polymere, insbesondere um thermoplastische Polymere. Für die Komponente C kommen alle Polymere in Betracht, die für das thermoplastische Copolymere A genannt wurden. In der Regel unterscheiden sich die Komponente C und das thermoplastische Copolymer A durch die verwendeten Monomere.

Sind die Monomere, aus denen die Komponente C und das thermoplastische Copolymer A aufgebaut sind, identisch, so unterscheiden sich die Komponente C und das thermoplastische Copolymer A in der Regel durch die Mengenanteile der Monomere, beispielsweise können die Komponente C und das thermoplastische Copolymer A Styrol-Acrylnitril-Copolymere sein, die sich im Styrol : Acrylnitril-Verhältnis unterscheiden. Falls auch die Mengenanteile der Monomere identisch sind, unterscheiden sich die Komponente C und das thermoplastische Copolymer A durch ihre verschiedenen mittleren Molmassen Mw (A) und Mw (C), messbar beispielsweise als verschiedene Viskositätszahlen VZ (A) und VZ (C).

Als Monomere zur Herstellung der Komponente C können neben den für das thermoplastische Copolymer A unter anderem genannten Monomere Styrol, Acrylnitril, Methylmethacrylat und Vinylchlorid auch folgende Verbindungen als wesentliche Bestandteile verwendet werden : alpha-Methylstyrol und C₁- bis Cs-kernalkylierte Styrole bzw. alpha-Methylstyrole, Methacrylnitril, C₁- bis C₁₂-Alkylester der Acrylsäure und der Methacrylsäure, Maleinsäure, Maleinsäureanhydrid, sowie Maleinsäureimide, Vinylether, Vinylformamid.

Beispielhaft seien für die Komponente C Polymere auf Basis alpha-Methylstyrol/Acrylnitril und Methylmethacrylat/Alkylacrylat, sowie Copolymere aus Alkylestern der Acrylsäure oder der Methacrylsäure und Styrol bzw. Acrylnitril bzw. Styrol und Acrylnitril genannt.

Weitere bevorzugte Komponenten C sind Styrol-Acrylnitril-Copolymere mit von dem thermoplastischen Copolymer A abweichenden Mengenanteilen der Monomere, oder verschiedenen mittleren Molmassen Mw. Die Bestimmung von Mw erfolgt nach gängigen Methoden.

Geeignete Polycarbonate sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im Allgemeinen als Bisphenol A bezeichnet. Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen. Die relative Viskosität dieser Polycarbonate liegt im Allgemeinen im Bereich von 1,1 bis 1,5, insbesondere von 1,28 bis 1,4 (gemessen bei 25°C in einer 0,5 Gew.-%igen Lösung in Dichlormethan).

Polybutylenterephthalat und Polyethylenterephthalat werden bevorzugt durch Kondensation von Terephthalsäure bzw. deren Estern mit Butandiol bzw. Ethandiol unter Katalyse hergestellt. Dabei wird die Kondensation vorteilhaft zweistufig (Vorkondensation und Polykondensation) durchgeführt. Einzelheiten sind etwa Ullmann's Encyclopädie der Technischen Chemie, 4. Auflage, Band 19, S. 61-88 zu entnehmen.

Bevorzugte Polyamide sind solche mit aliphatischem teilkristallinem oder teilaromatischem sowie amorphem Aufbau jeglicher Art und deren Blends. Thermoplastische Polyurethane (TPU) werden üblicherweise hergestellt durch Umsetzung von organischen, vorzugsweise aromatischen Diisocyanaten wie etwa 4,4'-Diphenylmethandiisocyanat, mit Polyhydroxylverbindungen, die vorzugsweise im Wesentlichen linear sind, etwa Polyetherole oder Polyesterole wie Polyalkylenglycolpolyadipate, und als Kettenverlängerungsmittel wirkenden Diolen wie Butan-1,4-diol, in Gegenwart von Katalysatoren wie etwa tertiären Aminen (wie Triethylamin) oder organischen Metallverbindungen. Dabei beträgt das Verhältnis NCO-Gruppen der Diisocyanate zur Summe der OH-Gruppen (aus den Polyhydroxylverbindungen und den kettenverlängernden Diolen) bevorzugt etwa 1 zu 1. Bevorzugt erfolgt die Herstellung der TPU nach dem sogenannten Bandverfahren. Einzelheiten zu den TPU sind zum Beispiel der EP-A 443 432 zu entnehmen.

Weiterhin kann die Komponente C im Wesentlichen aus Copolymeren von C₂- bis C₉-Alkenen wie Ethylen, Propen und Buten mit Vinylaromaten, polaren Comonomeren wie Acrylsäure und Methacrylsäure, den C₁- bis C₁₂-Alkylestern der Acrylsäure und der Methacrylsäure, anderen mono- oder polyfunktionellen ethylenisch ungesättigten Säuren wie Maleinsäure, Maleinsäureanhydrid, Fumarsäure, Itaconsäure sowie deren Estern, insbesondere Glycidylestern, Estern mit C₁- bis C₉-Alkanolen und Estern mit arylsubstituierten C₁- bis Cg-Alkanolen, Kohlenstoffmonoxid, nichtaromatischen Vinylverbindungen wie Vinylacetat, Vinylpropionat und Vinylalkylethern, basischen Monomeren wie Hydroxyethylacrylat, Dimethylaminoethylacrylat, Vinylcarbazol, Vinylanilin, Vinylcaprolactam, Vinylpyrrolidon, Vinylimidazol und Vinylformamid, Acrylnitril, Methacrylnitril bestehen, die in allgemein bekannter Weise hergestellt werden.

In einer Ausführungsform wird eine Komponente C verwendet, die aus 40 Gew.-% bis 75 Gew.-% Ethylen, 5 Gew.-% bis 20 Gew.-% Kohlenstoffmonoxid und 20 Gew. -% bis 40 Gew. -% n-Butylacrylat herstellbar ist, oder eine Komponente C, die aus 50 Gew. -% bis 98,9 Gew. -% Ethylen, 1 Gew. -% bis 45 Gew.-% n-Butylacrylat und 0,1 Gew. -% bis 20 Gew.-% einer oder mehreren Verbindungen ausgewählt aus der Gruppe Acrylsäure, Methacrylsäure und Maleinsäureanhydrid, herstellbar ist. Die Herstellung der letztgenannten Ausführungsformen erfolgt üblicherweise durch radikalische Polymerisation und ist in den Schriften US 2 897 183 und US 5 057 593 beschrieben.

Neben dem thermoplastischen Copolymer A, dem Pfropfcopolymer B und der Komponente C können die nach dem erfindungsgemäßen Verfahren hergestellten thermoplastischen Formmassen als weitere Komponente K Additive und Hilfsmittel, beispielsweise Wachse, Weichmacher, Gleit- und Entformungsmittel, Pigmente, Farbstoffe, Mattierungsmittel, Flammschutzmittel, Antioxidantien, Stabilisatoren gegen Lichteinwirkung und thermische Schädigung, faser- und pulverförmige Füll- und Verstärkungsmittel und Antistatika in den für diese Mittel üblichen Mengen enthalten.

Die Komponenten K können in reiner Form fest, flüssig oder gasförmig vorliegen oder bereits als Gemisch der reinen Stoffe miteinander eingesetzt werden. Sie können ebenso in einer Formulierung eingesetzt werden, welche die Dosierung erleichtert, etwa als Lösung, oder als Dispersion (Emulsion oder Suspension). Auch eine Formulierung als Masterbatch, d. h. als konzentrierte Mischung mit einem mit dem Extruderinhalt verträglichen thermoplastischen Polymeren, ist geeignet und in manchen Fällen bevorzugt.

In einer ersten bevorzugten Ausführungsform enthält die thermoplastische Formmasse mindestens ein Kautschuk-modifiziertes Styrol-Acrylnitril(SAN)-Copolymer (als thermoplastisches Copolymer A) mit mindestens einem Acrylester-Styrol-Acrylnitril (ASA) Kautschuk (als Pfropfcopolymer B), insbesondere mit einer bimodalen Teilchengrößenverteilung und einer mittleren Teilchengröße von 80 nm bis 600 nm, oftmals auch 200 nm bis 600 nm, sowie einer SAN-Matrix mit einem Acrylnitril(AN)-Gehalt von 25 Gew.-% bis 35 Gew.-%, bevorzugt 27 Gew.-% bis 33 Gew.-%.

In der ersten bevorzugten Ausführungsform enthält die thermoplastische Formmasse weiter bevorzugt:
A: 5 bis 90 Gew.-%, mindestens des thermoplastischen Copolymers A, hergestellt aus:
   A1: 50 bis 95 Gew.-%, bezogen auf das Copolymer A, eines Monomers A1, ausgewählt aus Styrol, α-Methylstyrol oder Mischungen von Styrol und mindestens einem weiteren Monomer ausgewählt aus α-Methylstyrol, p-Methylstyrol und C₁-C₈-Alkyl(meth)acrylat,
   A2: 5 bis 50 Gew.-%, bezogen auf das Copolymer A, eines Monomers A2, ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren und Imiden ungesättigter Carbonsäuren,
B: 5 bis 70 Gew.-%, mindestens des Pfropfcopolymers B, enthaltend:
   B1: 50 bis 90 Gew.-%, bezogen auf das Pfropfcopolymer B, mindestens einer Pfropfgrundlage B1, welche erhalten wird durch Emulsionspolymerisation von:
      B11: 70 bis 99,9 Gew.-%, bezogen auf die Pfropfgrundlage B1, mindestens eines C₁-C₈-Alkyl(meth)acrylat, als Monomer B11;
      B12: 0,1 bis 10 Gew.-%, bezogen auf die Pfropfgrundlage B1, mindestens eines polyfunktionalen vernetzenden Monomers B12;
      B13: 0 bis 29,5 Gew.-%, bevorzugt 0 bis 20 Gew.-%, besonders bevorzugt 0 bis 10 Gew.-%, bezogen auf die Pfropfgrundlage B1, mindestens eines weiteren Monomers B13 ausgewählt aus Styrol, α-Methylstyrol, C₁-C₄-Alkylstyrol, Acrylnitril, Methacrylnitril, Isopren, Butadien, Chloropren, Methylmethacrylat, Alkylenglykol-di(meth)acrylat und Vinylmethylether;
      wobei die Summe B11 + B12 + B13 gerade 100 Gew.-% ergibt; und
   B2: 10 bis 50 Gew.-%, bezogen auf das Pfropfcopolymer B, mindestens einer Pfropfhülle B2, bevorzugt ein bis drei Pfropfhüllen B2, welche erhalten wird durch Emulsionspolymerisation in Gegenwart der mindestens einen Pfropfgrundlage B1 von:
      B21: 50 bis 100 Gew.-%, bezogen auf die Pfropfhülle B2, eines Monomers B21, ausgewählt aus Styrol, α-Methylstyrol oder Mischungen von Styrol und mindestens einem weiteren Monomer ausgewählt aus α-Methylstyrol, p-Methylstyrol und C₁-C₄-Alkyl(meth)acrylat;
      B22: 0 bis 50 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren und Imiden ungesättigter Carbonsäuren;
      wobei die Gesamtsumme aus Pfropfgrundlage B1 und Pfropfhülle B2 gerade 100 Gew.-% ergibt; und
C: 0 bis 90 Gew.-%, mindestens einer weiteren polymeren Komponente C, und
K: 0 bis 40 Gew.-%, mindestens einer weiteren Komponente K ausgewählt aus Additiven und Hilfsmitteln.

Der Ausdruck (Meth)acryl, beispielsweise in der Bezeichnung (Meth)acrylsäure oder (Meth)acrylsäure-C₁-C₈-alkylester, umfasst im Sinne der vorliegenden Erfindung die entsprechenden Acryl- und/oder Methacryl-Verbindungen.

In der ersten bevorzugten Ausführungsform wird das thermoplastische Copolymer A bevorzugt hergestellt aus (bzw. besteht aus):
50 bis 95 Gew.-%, bevorzugt 60 bis 90 Gew.-%, besonders bevorzugt 60 bis 85 Gew.-%, bezogen auf das Copolymer A, des Monomers A1, ausgewählt aus Styrol, α-Methylstyrol oder Mischungen von Styrol und α -Methylstyrol, und
5 bis 50 Gew.-%, bevorzugt 10 bis 40 Gew.-%, besonders bevorzugt 15 bis 40 Gew.-%, bezogen auf das Copolymer A, eines Monomers A2, ausgewählt aus Acrylnitril oder Mischungen von Acrylnitril und Methacrylnitril.

In der ersten bevorzugten Ausführungsform enthält das Pfropfcopolymer B bevorzugt 10 bis 50 Gew.-%, mehr bevorzugt 20 bis 50 Gew.-%, besonders bevorzugt 25 bis 45 Gew.-%, bezogen auf das Pfropfcopolymer B, mindestens einer Pfropfhülle B2, welche erhalten wird durch Emulsionspolymerisation von:
B21: 50 bis 95 Gew.-%, bevorzugt 65 bis 80 Gew.-%, besonders bevorzugt 70 bis 80 Gew.-%, bezogen auf die Pfropfhülle B2, eines Monomers B21, ausgewählt aus Styrol, α-Methylstyrol oder Mischungen von Styrol und mindestens einem weiteren Monomer ausgewählt aus α-Methylstyrol, p-Methylstyrol und C₁-C₄-Alkyl(meth)acrylat (z.B. Methylmethacrylat, Ethylmethacrylat), bevorzugt ausgewählt aus Styrol, α-Methylstyrol oder Mischungen von Styrol mit α-Methylstyrol oder Methylmethacrylat; und
B22: 5 bis 50 Gew.-%, bevorzugt 20 bis 35 Gew.-%, besonders bevorzugt 20 bis 30 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid), bevorzugt ausgewählt aus Acrylnitril oder Mischungen von Acrylnitril und Methacrylnitril;
wobei die Summe B21 + B22 gerade 100 Gew.-% ergibt.

In der ersten bevorzugten Ausführungsform besteht das Pfropfcopolymer B bevorzugt aus der Pfropfgrundlage B1 wie oben beschrieben, bevorzugt aus einem vernetzten Polybutylacrylat-Kautschuk, und genau einer Pfropfhülle B2, welche erhalten wird durch Emulsionspolymerisation der Monomere B21 und B22 wie beschrieben, insbesondere von Styrol und Acrylnitril, in Gegenwart der Pfropfgrundlage B1 (einstufige Pfropfhülle B2). Weiterhin bevorzugt besteht das Pfropfcopolymer B aus der Pfropfgrundlage B1 wie oben beschrieben, bevorzugt aus einem vernetzten Polybutylacrylat-Kautschuk, und zwei Pfropfhüllen B2' und B2", wobei B2' erhalten wird durch Emulsionspolymerisation des Monomers B21 wie beschrieben, insbesondere von Styrol, in Gegenwart der Pfropfgrundlage B1 und wobei die Pfropfhülle B2" erhalten wird durch anschließende Emulsionspolymerisation der Monomere B21 und B22 wie beschrieben, insbesondere von Styrol und Acrylnitril, in Gegenwart der mit B2' gepfropften Pfropfgrundlage B1 (zweistufige Pfropfhülle B2).

Besonders bevorzugt wird die mindestens eine Pfropfgrundlage B1 erhalten durch Emulsionspolymerisation von:
B11: bevorzugt 87 bis 99,5 Gew.-%, bezogen auf die Pfropfgrundlage B1, mindestens C₄-C₈-Alkyl(meth)acrylats, insbesondere bevorzugt n-Butylacrylat und/oder 2-Ethylhexylacrylat, besonders bevorzugt ausschließlich n-Butylacrylat;
B12: 0,5 bis 5 Gew.-%, bevorzugt 0,5 bis 3 Gew.-%, besonders bevorzugt 1 bis 2,5 Gew.-%, bezogen auf die Pfropfgrundlage B1, mindestens eines polyfunktionalen, vernetzenden Monomers B12; bevorzugt ausgewählt aus Allyl(meth)acrylat, Divinylbenzol, Diallylmaleat, Diallylfumarat, Diallylphthalat, Triallylcyanurat, Triallylisocyanurat und Dicyclopentadienylacrylat (DCPA), insbesondere bevorzugt Allyl(meth)acrylat und/oder Dicyclopentadienylacrylat (DCPA);
B13: 0 bis 29,9 Gew.-%, bevorzugt 0 bis 10 Gew.-%, besonders bevorzugt 0,5 bis 10 Gew.-%, bezogen auf die Pfropfgrundlage B1, mindestens eines weiteren copolymerisierbaren, monoethylenisch ungesättigten Monomers B13, ausgewählt aus Styrol, α-Methylstyrol, C₁-C₄-Alkylstyrol, Acrylnitril, Methacrylnitril, Isopren, Butadien, Chloropren, Methylmethacrylat, Alkylenglykol-di(meth)acrylat und Vinylmethylether;
wobei die Summe B11 + B12 +B13 gerade 100 Gew.-% ergibt.

Die bevorzugten Monomere B11 zur Herstellung der Pfropfgrundlage B1 sind Alkylacrylate und/oder Alkylmethacrylate mit 1 bis 8, bevorzugt 4 bis 8 Kohlenstoffatomen im Alkylrest. Insbesondere bevorzugt ist das Monomer B11 n-Butylacrylat und/oder 2-Ethylhexylacrylat, besonders bevorzugt n-Butylacrylat. Bevorzugt werden die genannten Alkylacrylate als einzige Monomere B11 eingesetzt.

Weiterhin kann die mindestens eine Pfropfgrundlage B1 erhalten werden durch Emulsionspolymerisation von:
B11: 90 bis 99,9 Gew.-%, bevorzugt 97 bis 99,5 Gew.-%, bezogen auf die Pfropfgrundlage B1, mindestens eines C₁-C₈-Alkyl(meth)acrylats, bevorzugt n-Butylacrylat,
B12: 0,1 bis 10 Gew.-%, bevorzugt 0,5 bis 3 Gew.-%, besonders bevorzugt 1 bis 2,5 Gew.-%, bezogen auf die Pfropfgrundlage B1, mindestens eines polyfunktionalen, vernetzenden Monomers B12; ausgewählt aus Allyl(meth)acrylat, Divinylbenzol, Diallylmaleat, Diallylfumarat, Diallylphthalat und Dicyclopentadienylacrylat (DCPA), insbesondere bevorzugt Allyl(meth)acrylat und/oder Dicyclopentadienylacrylat (DCPA);
wobei die Summe B11 + B12 gerade 100 Gew.-% ergibt.

Die Pfropfgrundlage B1, bestehend aus den Monomeren B11, B12 und optional B13, sowie deren Herstellung ist bekannt und in der Literatur beschrieben, z.B. in DE-A 28 26 925, DE-A 31 49 358 und DE-A 34 14 118.

Außer dem thermoplastischen Copolymer A und dem Pfropfcopolymer B können die thermoplastischen Formmassen, insbesondere in der ersten bevorzugten Ausführungsform, die weitere Komponente C enthalten.

In einer Ausführungsform handelt es sich bei der thermoplastischen Formmasse um einen ASA-Blend enthaltend 1 bis 90 Gew.-%, bevorzugt 10 bis 85 Gew.-%, besonders bevorzugt 20 bis 50 Gew.-%, insbesondere bevorzugt 1 bis 30 Gew.-%, bezogen auf die gesamte thermoplastische Formmasse, mindestens einer kautschukfreien nicht aus Vinylmonomeren aufgebauten weiteren polymeren Komponente C, bevorzugt ausgewählt aus Polycarbonaten, Polyestercarbonaten und Polyamiden. Bevorzugt handelt es sich bei der thermoplastischen Formmasse um einen PC/ASA-Blend enthaltend 1 bis 90 Gew.-%, bevorzugt 10 bis 85 Gew.-%, besonders bevorzugt 20 bis 50 Gew.-%, oftmals 10 bis 40 Gew.-%, bezogen auf die gesamte thermoplastische Formmasse, mindestens eines aromatischen Polycarbonats und/oder aromatischen Polyestercarbonats als weitere polymere Komponente C.

Insbesondere fallen unter den Begriff Polycarbonate die Ester der Kohlensäure (Kondensationsprodukte von aromatischen Diphenolen mit Carbonsäurehaliden, insbesondere Phosgen) und aromatische Polyestercarbonate (Kondensationsprodukte von Diphenolen mit aromatischen Dicarbonsäurehaliden).

Es können auch gemischte Kondensationsprodukte als aromatische Polyestercarbonate eingesetzt werden, wobei der Anteil an Carbonatgruppen bis zu 50 mol.-%, insbesondere bis zu 80 mol.-%, besonders bevorzugt bis zu 100 mol.-%, bezogen auf die Summe der Carbonatgruppen und der Estergruppen, betragen kann. Ester- und Carbonatgruppen können in dem Kondensationsprodukt in Form von Blöcken oder in statistischer Verteilung auftreten.

In einer bevorzugten Ausführungsform enthält die thermoplastische Formmasse 1 bis 90 Gew.-%, bevorzugt 10 bis 85 Gew.-%, insbesondere bevorzugt 10 bis 40 Gew.-%, mindestens eines aromatischen Polycarbonats als Komponente C, welches aufgebaut ist aus 2,2-bis-(4-Hydroxyphenyl)-propan (Bisphenol A) und Phosgen, wobei Polycarbonate hergestellt aus Vorstufen oder synthetische Aufbaublocks von Bisphenol A und Phosgen ebenso umfasst sind.

In einer zweiten bevorzugten Ausführungsform enthält die thermoplastische Formmasse:
A: 5 bis 95 Gew.-% mindestens des thermoplastischen Copolymers A hergestellt aus:
   A1: 50 bis 95 Gew.-%, bezogen auf das Copolymer A, eines Monomers A1, ausgewählt aus Styrol, α-Methylstyrol oder Mischungen von Styrol und mindestens einem weiteren Monomer ausgewählt aus α-Methylstyrol, p-Methylstyrol und (Meth)acrylsäure-C₁-C₈-alkylester,
   A2: 5 bis 50 Gew.-%, bezogen auf das Copolymer A, eines Monomers A2, ausgewählt aus Acrylnitril oder Mischungen von Acrylnitril und mindestens einem weiteren Monomer ausgewählt aus Methacrylnitril, Anhydriden ungesättigter Carbonsäuren und Imiden ungesättigter Carbonsäuren,
B: 5 bis 95 Gew.-%, mindestens des Pfropfcopolymers B, enthaltend:
   B1: 40 bis 85 Gew.-%, bezogen auf das Pfropfcopolymer B, mindestens einer Pfropfgrundlage B1, welche erhalten wird durch Emulsionspolymerisation von:
      B11: 50 bis 100 Gew.-%, bezogen auf die Pfropfgrundlage B1, Butadien,
      B12: 0 bis 50 Gew.-%, bezogen auf die Pfropfgrundlage B1, mindestens eines weiteren Monomers B12 ausgewählt aus Styrol, α-Methylstyrol, Acrylnitril, Methacrylnitril, Isopren, Chloropren, C₁-C₄-Alkylstyrol, (Meth)acrylsäure-C₁-C₈-alkylester, Alkylenglykol-di(meth)acrylat und Divinylbenzol;
      wobei die Summe B11 + B12 gerade 100 Gew.-% ergibt; und
   B2: 15 bis 60 Gew.-%, bezogen auf das Pfropfcopolymer B, einer Pfropfhülle B2, welche erhalten wird durch Emulsionspolymerisation in Gegenwart der mindestens einen Pfropfgrundlage B1 von:
      B21: 50 bis 95 Gew.-%, bezogen auf die Pfropfhülle B2, eines Monomers B21, ausgewählt aus Styrol oder Mischungen von Styrol und mindestens einem weiteren Monomer ausgewählt aus α-Methylstyrol, p-Methylstyrol und (Meth)acrylsäure-C₁-C₈-alkylester,
      B22: 5 bis 50 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Anhydriden ungesättigter Carbonsäuren und Imiden ungesättigter Carbonsäuren;
      wobei die Gesamtsumme aus Pfropfgrundlage B1 und Pfropfhülle B2 gerade 100 Gew.-% ergibt; und
K: 0 bis 90 Gew.-%, mindestens einer weiteren Komponente K.

In der zweiten bevorzugten Ausführungsform ist das thermoplastische Copolymer A bevorzugt hergestellt aus (bzw. besteht aus):
A1: 50 bis 95 Gew.-%, bevorzugt 65 bis 80 Gew.-%, besonders bevorzugt 69 bis 80 Gew.-%, insbesondere bevorzugt 71 bis 80 Gew.-%, bezogen auf das Copolymer A, des Monomers A1, ausgewählt aus Styrol, α-Methylstyrol oder Mischungen von Styrol und α -Methylstyrol, und
A2: 5 bis 50 Gew.-%, bevorzugt 20 bis 35 Gew.-%, besonders bevorzugt 20 bis 31 Gew.-%, insbesondere bevorzugt 20 bis 29 Gew.-%, bezogen auf das Copolymer A, des Monomers A2, ausgewählt aus Acrylnitril oder Mischungen von Acrylnitril und Methacrylnitril.

In der zweiten bevorzugten Ausführungsform wird die mindestens eine Pfropfgrundlage B1 bevorzugt erhalten durch Emulsionspolymerisation von:
B11: 50 bis 100 Gew.-%, bevorzugt 80 bis 100 Gew.-%, bezogen auf die Pfropfgrundlage B1, Butadien,
B12: 0 bis 50 Gew.-%, bevorzugt 0 bis 20 Gew.-%, besonders bevorzugt 0 bis 10 Gew.-%, bezogen auf die Pfropfgrundlage B1, mindestens eines weiteren Monomers B12 ausgewählt aus Styrol und Acrylnitril;
wobei die Summe B11 + B12 gerade 100 Gew.-% ergibt.

Bevorzugt wird die mindestens eine Pfropfgrundlage B1 erhalten durch Emulsionspolymerisation von Butadien alleine. In einer weiteren Ausführungsform wird die mindestens einer Pfropfgrundlage B1 erhalten durch Emulsionspolymerisation von:
B11: 50 bis 99 Gew.-%, bevorzugt 80 bis 95 Gew.-%, bezogen auf die Pfropfgrundlage B1, Butadien,
B12: 1 bis 50 Gew.-%, bevorzugt 5 bis 20 Gew.-%, besonders bevorzugt 5 bis 10 Gew.-%, bezogen auf die Pfropfgrundlage B1, mindestens eines weiteren Monomers B12 ausgewählt aus Styrol und Acrylnitril;
wobei die Summe B11 + B12 gerade 100 Gew.-% ergibt.

Bevorzugt handelt es sich bei dem Monomer B21 um Styrol oder Mischungen von Styrol und mindestens einem weiteren Monomer ausgewählt aus α-Methylstyrol, Methylmethacrylat, Ethylmethacrylat, n-Butylacrylat und t-Butylacrylat, besonders bevorzugt um Styrol oder Mischungen von Styrol und mindestens einem weiteren Monomer ausgewählt aus α-Methylstyrol und Methylmethacrylat.

Bevorzugt handelt es sich bei dem Monomer B22 um Acrylnitril oder Mischungen von Acrylnitril und mindestens einem weiteren Monomer ausgewählt aus Methacrylnitril, Maleinsäureanhydrid, N-Cyclohexylmaleimid und N-Phenylmaleimid, besonders bevorzugt um Acrylnitril oder Mischungen von Acrylnitril und mindestens einem weiteren Monomer ausgewählt aus Methacrylnitril und Maleinsäureanhydrid.

In einer besonders bevorzugten Ausführungsform handelt sich bei dem Monomer B21 um Styrol und bei dem Monomer B22 um Acrylnitril.

Weiter bevorzugt weist die Pfropfgrundlage B1 einen mittleren Teilchendurchmesser dso im Bereich von 100 nm bis 1000 nm auf. Ferner weist die Pfropfgrundlage B1 bevorzugt einen Gelgehalt im Bereich von 30 bis 95 Gew.-% auf. Typischerweise wird der mittleren Teilchendurchmesser dso durch Ultrazentrifugenmessung ermittelt, wie beispielsweise in W. Scholtan, H. Lange (Kolloid Z. u. Z. Polymere 250, S. 782 bis 796 (1972)) beschrieben. Die angegebenen Werte für den Gelgehalt beziehen sich auf die Bestimmung nach der Drahtkäfigmethode in Toluol, wie beispielsweise in Houben-Weyl (Methoden der Organischen Chemie, Makromolekulare Stoffe, Teil 1, S. 307 (1961), Thieme Verlag Stuttgart) beschrieben.

Methoden zur Herstellung der mindestens einen Pfropfgrundlage B1 sind beispielsweise in Houben-Weyl, Methoden der Organischen Chemie, Makromolekulare Stoffe Teil 1, S. 339 (1961), Thieme Verlag Stuttgart, beschrieben.

In einer bevorzugten Ausführungsform umfasst das erfindungsgemäße Verfahren die Herstellung von mindestens zwei verschiedenen Pfropfcopolymeren B ausgehend von mindestens zwei verschiedenen Pfropfgrundlagen B1, wobei sich die Pfropfgrundlagen B1 durch ihren mittleren Teilchendurchmesser d₅₀ unterscheiden.

Weitere Details zur Agglomeration können der WO 2012/022710 A1 entnommen werden. Emulgatoren, Initiatoren und Molekulargewichtsregler, Basen, Säuren und Salze können wie in WO 2012/022710 A1 beschrieben eingesetzt werden.

In der zweiten bevorzugten Ausführungsform handelt es sich weiter bevorzugt bei der thermoplastischen Formmasse um einen ABS-Blend enthaltend 1 bis 90 Gew.-%, bevorzugt 10 bis 87,5 Gew.-%, besonders bevorzugt 20 bis 50 Gew.-%, bezogen auf die gesamte thermoplastische Formmasse, mindestens eines kautschukfreien nicht aus Vinylmonomeren aufgebauten Thermoplastharzes, bevorzugt ausgewählt aus Polycarbonaten und Polyamiden.

In der ersten und der zweiten bevorzugten Ausführungsform ist das thermoplastische Copolymer A ein thermoplastisches Copolymer A mit weniger oder gleich 35 Gew.-%, bezogen auf das gesamte Copolymer A, an Acrylnitril.

Weiter bevorzugt handelt es sich bei Monomer A1 um Styrol oder α-Methylstyrol, bei Monomer A2 um Acrylnitril. In einer weiter bevorzugten Ausführungsform handelt es sich bei Monomer A1 um eine Mischung aus Styrol und α-Methylstyrol und bei Monomer A2 um Acrylnitril. Bevorzugt enthält die beschriebene Monomer-Mischung A1 mindestens 10 Gew.-%, bevorzugt mindestens 50 Gew.-% und besonders bevorzugt mindestens 90 Gew.-%, bezogen auf das gesamte Monomer A1, Styrol.

Das thermoplastische Copolymer A weist vorzugsweise mittlere Molekulargewichte M_{w} im Bereich von 20.000 bis 200.000 g/mol auf. Bevorzugt weist das thermoplastische Copolymer A Grenzviskositäten [η] im Bereich von 20 bis 110 ml/g (gemessen in Dimethylformamid bei 25°C) auf. Das thermoplastische Copolymer A weist vorzugsweise eine Viskositätszahl (bestimmt gemäß DIN 53726:1983-09) im Bereich von 50 bis 100 cm³/g, bevorzugt von 55 bis 85 cm³/g auf.

Einzelheiten zur Herstellung des thermoplastischen Copolymers A sind auch in DE-A 24 20 358 und DE-A 27 24 360 beschrieben. Ebenso geeignete thermoplastischen Copolymere A sind auch in DE-A 1 971 3509 beschrieben.

Die thermoplastischen Copolymere können sowohl durch rein thermische Initiierung als auch durch Zusatz von Initiatoren, insbesondere von radikalischen Initiatoren, beispielsweise von Peroxiden, hergestellt werden. Geeignete thermoplastische Copolymere A können bevorzugt durch Masse- oder Lösungspolymerisation hergestellt werden.

Die bei der Emulsionspolymerisation des Pfropfcopolymers B eingesetzten Monomeren sind vorzugsweise Mischungen aus Styrol und Acrylnitril im Gewichtsverhältnis 95 : 5 bis 50 : 50, besonders bevorzugt im Gewichtsverhältnis 80 : 20 bis 65 : 35.

Zusätzlich können bei der Herstellung der Pfropfgrundlage B1 und/oder bei der Emulsionspolymerisation des mindestens einen Pfropfcopolymers B Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf die gesamte Monomer-Menge bei der Emulsionspolymerisation). Geeignete Molekulargewichtsregler sind beispielsweise Alkylmercaptane, wie n-Dodecylmercaptan, t-Dodecylmercaptan; dimeres α-Methylstyrol und Terpinolen.

Als Initiatoren bei der Herstellung der Pfropfgrundlage B1 und/oder bei der Emulsionspolymerisation des mindestens einen Pfropfcopolymers B können beliebige Initiatoren eingesetzt werden. Bevorzugt wird mindestens eine organische und/oder anorganische Peroxid-Verbindung (umfassend mindestens eine Peroxidgruppe R-O-O-H und/oder R-O-O-R) als Initiator verwendet. Insbesondere werden anorganische Peroxid-Salze, wie Peroxodisulfate (Persulfate), Perphosphate und Perborate von Ammonium, Natrium oder Kalium, eingesetzt. Besonders bevorzugt sind Natrium- und Kaliumpersulfate.

In einer bevorzugten Ausführungsform wird bei der Emulsionspolymerisation des Pfropfcopolymers B ein anorganisches Peroxid-Salz, insbesondere ein anorganisches Peroxodisulfat-Salz, bevorzugt Natriumperoxodisulfat und/oder Kaliumperoxodisulfat, eingesetzt.

Als Emulgator bei der Herstellung der Pfropfgrundlage B1 und/oder bei der Emulsionspolymerisation zur Herstellung des mindestens einen Pfropfcopolymers B können typischerweise übliche anionische Emulgatoren eingesetzt werden. Bevorzugt werden als Emulgatoren Alkylsulfate, Alkylsulfonate, Arylalkylsulfonate, Seifen gesättigter oder ungesättigter Fettsäuren sowie alkalischer disproportionierter oder hydrierter Abietin- oder Tallölsäuren oder Mischungen hiervon verwendet. Vorzugsweise werden Emulgatoren mit Carboxylgruppen (z.B. Salze von C₁₀-C₁₈-Fettsäuren, disproportionierte Abietinsäure, Emulgatoren gemäß DE-OS 36 39 904 und DE-OS 39 13 509) eingesetzt.

Es können weiterhin Salze, Säuren und Basen bei der Emulsionspolymerisation der Pfropfgrundlage B1 eingesetzt werden, z.B. Schwefelsäure, Phosphorsäure, Lösungen von Natriumhydroxid, Kaliumhydroxid, Natrium- und Kaliumsalze von Sulfaten und Phosphaten, insbesondere kann Tetranatriumpyrophosphat eingesetzt werden.

Typischerweise werden bei der Herstellung des Pfropfcopolymers B geeignete Puffersubstanzen, z.B. Natriumcarbonat und Natriumhydrogencarbonat, eingesetzt. Geeignete Emulgatoren, Puffersubstanzen und Initiatoren sind zudem in WO 2015/150223 A1 und WO 2015/078751 A1 beschrieben.

Die Polymerisationstemperatur bei der Emulsionspolymerisation des Pfropfcopolymers B beträgt im Allgemeinen 25°C bis 160°C, vorzugsweise 40°C bis 90°C. Geeignete Emulgatoren sind oben angegeben. Dabei kann nach üblicher Temperaturführung, z.B. isotherm, gearbeitet werden; vorzugsweise wird die Pfropfpolymerisation jedoch so durchgeführt, dass der Temperaturunterschied zwischen Beginn und Ende der Reaktion höchstens 20°C, vorzugsweise höchstens 15°C, und besonders bevorzugt vorzugsweise höchstens 5°C beträgt.

Die Herstellung des Pfropfcopolymers B erfolgt erfindungsgemäß mittels Emulsionspolymerisation. Dem Fachmann sind gängige Ausführungsformen der Emulsionspolymerisation im Batchbetrieb oder im kontinuierlichen Betrieb bekannt.

Insbesondere werden die Monomere der Pfropfhülle B2, d.h. die Monomere B21 und B22, separat oder als Monomer-Gemisch kontinuierlich zur Pfropfgrundlage B2, in den gegebenen Mengen und Verhältnissen zugegeben und polymerisiert. Dabei werden die Monomere typischerweise in einer für den Fachmann bekannten Weise zur Pfropfgrundlage B1 gegeben.

Als Komponente K können den erfindungsgemäßen Formmassen bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxid-Zerstörer, Antistatika, Gleitmittel, Entformungsmittel, Flammschutzmittel, Pigmente, Füll- oder Verstärkerstoffe (Glasfasern, Kohlefasern, etc.), Farbmittel.

Um die Pfropfcopolymere B während der Aufarbeitung vor thermischer Schädigung zu schützen und um die Aufarbeitung sicher und gefahrlos durchführen zu können, ist es sinnvoll Antioxidantien, z.B. ein oder mehrere phenolische Antioxidantien, sowie beliebige andere Substanzen, die die thermische Beständigkeit der Pfropfcopolymere erhöhen, in Form einer oder mehreren Emulsionen oder Dispersionen den Pfropfcopolymeren B zuzusetzen und durch Rühren zu vermischen.

Als weitere Komponente K können zudem teilchenförmige mineralische Füllstoffe eingesetzt werden, wie beispielsweise amorphe Kieselsäure, Carbonate wie Magnesiumcarbonat, Calciumcarbonat (Kreide), gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Kaolin, besonders kalzinierter Kaolin. Als weitere Komponente K können zudem faserförmige Füllstoffe wie Kohlenstofffasern, Kaliumtitanat-Whisker, Aramidfasern oder Glasfasern, eingesetzt werden. Gängige Additive zum Beispiel für ASA-Formmassen sind in WO 2015/150223 beschrieben.

Das erfindungsgemäße Verfahren zur Herstellung der thermoplastischen Formmasse umfasst insbesondere die folgenden Schritte:

### Schritt a)

Der erfindungsgemäße Schritt a) umfasst das Fällen des mindestens einen Pfropfcopolymers B nach der Emulsionspolymerisation durch Zugabe einer Fällungslösung, insbesondere enthaltend mindestens ein Salz.

In einer bevorzugten Ausführungsform umfasst der erfindungsgemäße Schritt a), dass verschiedene Pfropfcopolymere B getrennt oder zusammen durch Zugabe der Fällungslösung, insbesondere enthaltend mindestens ein Salz, gefällt werden. Hierbei werden die Pfropfcopolymere B in ihrer Latex-Form nach der Emulsionspolymerisation eingesetzt. Die gefällten Pfropfcopolymere B werden getrennt oder zusammen wie in den Schritten b) bis gegebenenfalls d) beschrieben weiter aufgearbeitet.

Als Fällungslösung zum Fällen des mindestens einen Pfropfcopolymers B nach der Emulsionspolymerisation können insbesondere wässrige Salzlösungen, beispielsweise wässrige Lösungen von Magnesiumsulfat, Kieserit, Pentahydrit, Hexahydrit, Epsomit (Bittersalz), Calciumchlorid, Natriumchlorid oder Mischungen hiervon eingesetzt werden. Bevorzugt ist es auch möglich, Mischungen von wässrigen Salzlösungen und Säuren (z.B. Schwefelsäure, Essigsäure) als Fällungslösung einzusetzen. Bevorzugte Salze sind hierbei Magnesiumsulfat, Kieserit (Mg[SO₄] • H₂O), Pentahydrit (Mg[SO₄] • 5H₂O), Hexahydrit (Mg[SO₄] • 6H₂O), und Epsomit (Mg[SO₄] • 7H₂O, Bittersalz), bevorzugte Säuren sind Schwefelsäure, Essigsäure und Mischungen hiervon. Besonders bevorzugt erfolgt das Fällen des mindestens einen Pfropfcopolymers B in Schritt a) durch Einwirkung einer wässrigen Salzlösung, wobei das Salz bevorzugt ausgewählt ist aus Magnesiumsulfat, Kieserit, Pentahydrit, Hexahydrit und Epsomit (Bittersalz).

Typischerweise weisen die Fällungslösungen eine Konzentration an Salz oder Salz und Säure im Bereich von 0,3 bis 10 Gew.-%, bezogen auf die Fällungslösung, auf. Das Fällen des mindestens einen Pfropfcopolymers B in Schritt a) kann einstufig oder mehrstufig unter Zugabe mehrerer Fällungslösungen erfolgen, wobei die Fällungslösungen gleich oder verschieden sein können.

Das Fällen des mindestens einen Pfropfcopolymers B kann bevorzugt durch kontinuierliche oder absatzweise Zugabe der Fällungslösung oder Zugabe des Pfropfcopolymer-Latex in die Fällungslösung durchgeführt werden. Im Falle der kontinuierlichen Zugabe findet die Fällung typischerweise in einem oder mehreren kontinuierlich betriebenen Rührbehältern, beispielsweise kontinuierlichen Rührkesseln, statt.

In einer besonders bevorzugten Ausführungsform werden eine wässrige Magnesiumsulfat-Lösung kontinuierlich und gleichzeitig in einer oder mehrerer Stufen zu dem Pfropfcopolymer B (Latex) dosiert.

Das Fällen kann in einem Temperaturbereich von 20°C bis 150°C; bevorzugt von 40°C bis 120°C, besonders bevorzugt von 50°C bis 100°C, durchgeführt werden.

Typischerweise kann die Mischung nach Zugabe der Fällungslösung in ein Sintergefäß unter Druck bei 85°C bis 150°C überführt werden.

Nach der Fällung können die gepfropften Partikel zu größeren Partikeln agglomerieren, wobei die Agglomerate des Pfropfcopolymers B, die insbesondere der Wirbelschicht zugeführt werden, zum Beispiel einen Partikeldurchmesser d₅₀ in einem Bereich von 50 µm bis 4000 µm, weiter bevorzugt von 100 µm bis 3000 µm, aufweisen können.

### Schritt b)

Der erfindungsgemäße Schritt b) umfasst das, insbesondere mechanische, Entwässern des gefällten Pfropfcopolymers B, bevorzugt mittels Zentrifugation und/oder Filtration, wobei ein entwässertes Pfropfcopolymer B mit einem Wassergehalt von kleiner oder gleich 50 Gew.-% erhalten wird.

Der Wassergehalt (oder auch als Restfeuchte bezeichnet) gibt typischerweise den Anteil an Wasser in Gewichtsprozent, bezogen auf das feuchte, also gesamte Wasser enthaltende, Pfropfcopolymer B, an. Insbesondere wird der Wassergehalt mit Hilfe geeigneter Analysegeräte (z.B. Trockenwaagen) bestimmt, wobei die Probe so lange getrocknet wird, bis eine Gewichtskonstanz der Probe über einen bestimmten Zeitraum erreicht ist, also die Trockenmasse vorliegt. Beispielsweise kann der Wassergehalt des Pfropfcopolymers B in einem Halogen Moisture Analyzer HR73 von Mettler-Toledo, bei 180°C bestimmt werden, bis eine Gewichtskonstanz für 30 Sekunden erreicht wird.

Bevorzugt erfolgt das Entwässern des gefällten Pfropfcopolymers B mittels Zentrifugation.

Insbesondere weist das entwässerte Pfropfcopolymer B einen Wassergehalt von mindestens 5 Gew.-%, weiter bevorzugt mindestens 15 Gew.-%, besonders bevorzugt mindestens 20 Gew.-%, auf, bezogen auf das entwässerte Pfropfcopolymer B. Als entwässertes Pfropfcopolymer B wird insbesondere das Pfropfcopolymer B bezeichnet, dass dem Entwässerungsschritt b) entnommen und dem Trocknungsschritt c) zugeführt wird. Das entwässerte Pfropfcopolymer B kann auch als vorentwässertes Pfropfcopolymer B bezeichnet werden. Bevorzugt wird in Schritt b) oder in einem nachgeschalteten Waschschritt ein Pfropfcopolymer B mit einem Wassergehalt im Bereich von 5 bis 45 Gew.-%, bevorzugt von 15 bis 40 Gew.-%, erhalten.

In einer weiteren Ausführungsform schließt sich nach dem Entwässern des Pfropfcopolymers B ein Waschschritt an, wobei das entwässerte Pfropfcopolymer B vorzugsweise mit Wasser oder einer Mischung aus Wasser und einem polaren, mit Wasser mischbaren organischen Lösungsmittel behandelt wird. Bevorzugt wird das Wasser oder die Mischung nach der Behandlung durch Filtration und/oder Zentrifugation abgetrennt. Bevorzugt entsteht dabei ein Pfropfcopolymer B mit einem Wassergehalt von kleiner oder gleich 50 Gew.-%.

### Schritt c)

Der erfindungsgemäße Schritt c) umfasst das kontinuierliche Trocknen des entwässerten Pfropfcopolymers B unter Verwendung eines Trocknungsgases, wobei das entwässerte Pfropfcopolymer B durch das Trocknungsgas bewegt wird und eine Wirbelschicht bildet und das Trocknungsgas eine Zuführtemperatur T_{G,zu} im Bereich von 50°C bis 160°C, bevorzugt von 55°C bis 155°C, besonders bevorzugt von 60°C bis 150°C, aufweist.

Bevorzugt wird das Pfropfcopolymer B zusammen mit dem strömenden Trocknungsgas bewegt, weiter bevorzugt wird das Pfropfcopolymer B durch das strömende Trocknungsgas in Bewegung gebracht, insbesondere in vertikaler Richtung, so dass die Wirbelschicht entsteht.

Bevorzugt wird als Trocknungsgas Luft, die Stickstoff und Sauerstoff enthält, Stickstoff, insbesondere ein Gas, das mehr als 95 Vol.-% Stickstoff enthält, oder beliebige Mischungen hiervon verwendet.

Bevorzugt wird in Schritt c) ein Fließbetttrockner (Wirbelschichttrockner) zum Trocknen eingesetzt. Insbesondere kann der Fließbetttrockner einen oder mehrere Wärmetauscher aufweisen.

Fließbetttrockner sind dem Fachmann bekannt. Insbesondere handelt es sich um Trocknungsvorrichtungen für partikelförmige, rieselfähige Materialien, wie sie in Krischer/Kröll, Trocknungstechnik, Zweiter Band, Trockner und Trocknungsverfahren (Springer-Verlag, 1959) beschrieben werden. Fließbetttrockner, auch Wirbelschichttrockner genannt, werden zum Beispiel in dem oben genannten Dokument auf den Seiten 275 bis 282 beschrieben.

Typischerweise wird in Fließbetttrocknern das zu trocknende Material (d.h. das entwässerte Pfropfcopolymer B mit einem Wassergehalt von kleiner oder gleich 50 Gew.-%) von unten (d.h. entgegen der Richtung der Schwerkraft) durch ein Gas, insbesondere Warmluft oder heiße Gase, insbesondere das Trocknungsgas, durchströmt und angehoben, aber nicht mitgetragen. Hierbei entsteht in der Regel eine Schicht, in der sich die Partikel des zu trocknenden Materials ständig aufwärts und abwärts bewegen und die wie eine brodelnde Flüssigkeit erscheinen kann.

Man spricht oftmals von einem Fließbett, auch Schwebebett oder Wirbelbett. Typischerweise müssen die Strömungsbedingungen des jeweiligen Systems so eingestellt werden, dass die gewünschte Wirbelschicht entsteht. In der Regel umfassen Fließbetttrockner eine Schwebekammer, in der das zu trocknende Material beispielsweise auf einem Siebboden liegt, durch den das Trocknungsgas von unten durch das Material strömt, mindestens eine Eingabevorrichtung für das zu trocknende (feuchte) Material und mindestens eine Abscheide- und Entnahmevorrichtung (Abscheider) für das getrocknete Material.

Hierbei kann ein Transport des entwässerten und gegebenenfalls bereits teilweise getrockneten Pfropfcopolymers B zum Beispiel durch eine schräge Zuführung, insbesondere schräge Eindüsung, des Trocknungsgases in die Wirbelschicht erfolgen. Zusätzlich oder alternativ kann der Transport durch eine wiederholte Bewegung, insbesondere eine Hin- und Herbewegung, oder eine Vibration einer Lochplatte, auf der die Wirbelschicht bevorzugt angeordnet ist, erfolgen, so dass das entwässerte Pfropfcopolymer B und gegebenenfalls das bereits teilweise getrocknete Pfropfcopolymer B in einer im Wesentlichen horizontalen Richtung von der Zufuhr zur Abfuhr, insbesondere von einem Einlass zu einem Auslass des Fließbetttrockners, transportiert wird.

Unter dem Begriff variabel wird insbesondere verstanden, dass der Massenstrom beziehungsweise der Wassergehalt variiert.

Das entwässerte Pfropfcopolymer B kann in Schritt c) mit einem über die Zeit variablen Massenstrom zugeführt werden. Bevorzugt variiert der Massenstrom in einem Bereich von 25% bis 100%, bezogen auf einen maximalen, insbesondere apparativ maximal möglichen, Massenstrom des entwässerten Pfropfcopolymers B bei Zufuhr des Pfropfcopolymers B beziehungsweise am Einlass.

Das entwässerte Pfropfcopolymer B kann in Schritt c) mit einem über die Zeit variablen Wassergehalt zugeführt werden. Bevorzugt variiert der Wassergehalt zwischen 5 bis 20 Gew.-% am Einlass, bezogen auf das entwässerte Pfropfcopolymer B. Insbesondere variiert der Wassergehalt um 5% bis 50%, bezogen auf einen gemittelten Wassergehalt des entwässerten Pfropfcopolymers B am Einlass.

Bevorzugt wird das entwässerte Pfropfcopolymer B in Schritt c) mit einem Wassergehalt in einem Bereich von 5 Gew.% bis 45 Gew.%, insbesondere 15 Gew.% bis 40 Gew.%, zugeführt, bezogen auf das entwässerte Pfropfcopolymer B.

Bevorzugt liegt ein Verhältnis von einem Massenstrom des in Schritt c) zugeführten entwässerten Pfropfcopolymers B, bezogen auf das getrocknete Pfropfcopolymer B, zu einem Massenstrom des in Schritt c) zugeführten Trocknungsgases in einem Bereich von 0,01 bis 2, insbesondere 0,05 bis 1, vor. Der Massenstrom des in Schritt c) zugeführten entwässerten Pfropfcopolymers B, bezogen auf das getrocknete Pfropfcopolymer B, beträgt zum Beispiel 2000 kg/h bis 4000 kg/h, insbesondere 3000 kg/h. Der Massenstrom des in Schritt c) zugeführten Trocknungsgases, das zum Beispiel Luft ist, liegt zum Beispiel in einem Bereich von 20.000 kg/h bis 40.000 kg/h.

Weiterhin weist das getrocknete Pfropfcopolymer B, das in Schritt c) erhalten wird, bevorzugt einen Wassergehalt im Bereich von 0,05 Gew.-% bis 1,5 Gew.-% und einen Gesamtgehalt an Restmonomeren von < 2000 ppm, jeweils bezogen auf das trockene Pfropfcopolymer B auf.

Insbesondere beträgt die mittlere Verweilzeit des Pfropfcopolymers B in der Wirbelschicht, insbesondere im Fließbetttrockner, 1 bis 60 min, bevorzugt 5 bis 50 min, besonders bevorzugt 10 bis 40 min.

In einer bevorzugten Ausführungsform erfolgt das Trocknen des entwässerten Pfropfcopolymers B in Schritt c) unter Verwendung eines Fließbetttrockners, welcher einen oder mehrere in das Fließbett integrierte Wärmetauscher aufweist. Durch den Einsatz von Wärmetauschern kann insbesondere - zusätzlich zu der Trocknungsenergie des heißen Trocknungsgases - Trocknungsenergie in das Fließbett eingebracht werden. Gängige Ausführungsformen von Wärmetauschern, wie beispielsweise Platten-, Rippenrohr-, Rohr-, und Spiral-Wärmetauscher, sind dem Fachmann bekannt und in Standardwerken beschrieben. Beispielsweise können Fließbetttrockner eingesetzt werden, die in D. Gehrmann, et al., Trocknungstechnik in der Lebensmittelindustrie (Behr's Verlag GmbH & Co.KG, 1. Auflage 2009, Abschnitt 2.5.3 Statische Wirbelschichttrockner, Seiten 143 bis 145) beschrieben sind. Die Wärmetauscher werden bevorzugt mit Temperaturen im Bereich von 50°C bis 100°C, bevorzugt 55°C bis 90°C, besonders bevorzugt 60°C bis 85°C betrieben. Insbesondere beträgt die Einlauftemperatur des Wärmeaustauschmediums (beispielsweise Wasser) 50°C bis 100°C, bevorzugt 55°C bis 90°C, besonders bevorzugt 60°C bis 85°C.

In Schritt c) können ein oder mehrere Fließbetttrockner (Wirbelschichttrockner) kontinuierlich betrieben werden.

Die Wirbelschicht kann in mindestens zwei Teilzonen, die auch als Teilwirbelschichten bezeichnet werden können, unterteilt sein, insbesondere durch mindestens ein Wehr. Das Wehr kann auch als Absperrung bezeichnet werden. Das mindestens eine Wehr staut den horizontalen Transport der Wirbelschicht, bis ein bestimmter Füllstand erreicht ist und die Wirbelschicht das Wehr oberhalb und/oder unterhalb überwindet. Insbesondere wird durch das mindestens eine Wehr eine Rückvermischung aufeinanderfolgender Teilzonen vermindert beziehungsweise verhindert. Liegen mindestens zwei Teilzonen vor, so kann die Betriebsweise auch als semi-kontinuierlich beschrieben werden.

Liegen mindestens zwei Teilzonen vor, so kann jede Teilzone jeweils einen Trocknungsgaseinlass beziehungsweise Abgasauslass aufweisen, so dass die Zuführtemperatur T_{G,zu} beziehungsweise die Endtemperatur Tₐᵤₛ jeweils separat für jede Teilzone gemessen werden kann. Insbesondere wird die Endtemperatur Tₐᵤₛ an einem letzten Auslass des getrockneten Pfropfcopolymers B und/oder des Abgases bestimmt. Die Endtemperatur Tₐᵤₛ kann alternativ eine Durchschnittstemperatur des Abgases beziehungsweiser der Abgase sein.

Die Zufuhrtemperatur T_{G,zu} des Trocknungsgases kann über die Länge der Wirbelschicht beziehungsweise die Förderrichtung variieren, wobei zur Berechnung der Differenz ΔTᵢₛₜ insbesondere eine erste Zufuhrtemperatur T_{G,zu,} insbesondere in der betrachteten Teilzone, herangezogen wird.

Beim kontinuierlichen Trocknen können ein gesamter Heizkreis oder mehrere separate Heizkreise verwendet werden, bevorzugt weist jede Teilzone jeweils einen separaten Heizkreis auf.

Die Schritte i. bis iv. des erfindungsgemäßen Verfahrens können auch als Regelungsverfahren bezeichnet werden. Gemäß dem erfindungsgemäßen Verfahren wird also ein Trocknungsgrad des getrockneten Pfropfcopolymers B über die Temperaturdifferenz ΔTᵢₛₜ geregelt. Entsprechend ist die Differenz ΔTᵢₛₜ bevorzugt eine Regelgröße. Die Differenz ΔTᵢₛₜ beträgt insbesondere mehr als 10°C. Weiterhin sind der Massenstrom an zugeführtem Trocknungsgas und/oder die Zuführtemperatur T_{G,zu} bevorzugt Steuergrö-ßen. Durch die vorgeschlagene Regelung kann ein variabler Massenstrom des entwässerten Pfropfcopolymers B und/oder ein variabler Wassergehalt des entwässerten Pfropfcopolymers B ausgeglichen werden.

Das Regelungsverfahren kann zur Regelung des einen Heizkreises, mehr als eines Heizkreises oder aller Heizkreise verwendet werden.

Die maximale Produkttemperatur im Trocknungsschritt c), d.h. die Temperatur des mindestens einen Pfropfcopolymers B (Fließbetttemperatur), die maximal während des Trocknungsschritts c) erreicht wird und die bevorzugt zwischen der Anfangstemperatur Tₑᵢₙ und der Endtemperatur Tₐᵤₛ liegt, beträgt insbesondere maximal 90°C, vorzugsweise maximal 85°C und ganz bevorzugt maximal 80°C. Typischerweise steigt die Produkttemperatur kurz vor Ende des Trocknungsschritts an. Bevorzugt liegt die mittlere Produkttemperatur während des Trocknungsschritts c) im Bereich von 30°C bis 70°C, bevorzugt von 35°C bis 60°C. In einer bevorzugten Ausführungsform liegt die Produkttemperatur in einer ersten Zone des Trockners im Bereich von 30°C bis 90°C, bevorzugt 30°C bis 60°C, insbesondere bevorzugt 35°C bis 50°C und in einer letzten Zone des Trockners im Bereich von 35°C bis 90°C, bevorzugt 40°C bis 80°C.

Die Zuführtemperatur T_{G,zu} des Trocknungsgases wird insbesondere vor dem Kontakt des Trocknungsgases mit der Wirbelschicht beziehungsweise mit dem Pfropfcopolymer B gemessen, insbesondere mit einem Thermoelement. Die Anfangstemperatur Tₑᵢₙ wird insbesondere in oder gegebenenfalls über der Wirbelschicht, insbesondere an oder vor einem ersten Wehr, bevorzugt mit einem Thermoelement, gemessen.

Die Anfangstemperatur Tₑᵢₙ kann direkt bei Zufuhr beziehungsweise am Einlass gemessen werden oder mit einem geringen Abstand zum Einlass, da die Wirbelschicht bei Zufuhr beziehungsweise am Einlass insbesondere einen homogenen Temperaturbereich aufweist, in dem die Temperatur nicht mehr als 5% von einer Temperatur direkt bei Zufuhr beziehungsweise am Einlass abweicht. Hierbei befindet sich das Thermoelement bevorzugt in der fluidisierten Mischung von entwässertem beziehungsweise teilweise getrocknetem Pfropfcopolymer B und dem Trocknungsgas. Insbesondere werden die Anfangstemperatur Tₑᵢₙ und die Endtemperatur Tₐᵤₛ mit einem Versatz in Förderrichtung zueinander gemessen.

Der Versatz beträgt bevorzug mindestens 20%, weiter bevorzugt mindestens 40% einer Gesamtlänge der Wirbelschicht während des kontinuierlichen Trocknens. Bei Verwendung mehrerer Teilzonen wird die Anfangstemperatur Tₑᵢₙ bevorzugt in der ersten Teilzone gemessen. Die Endtemperatur Tₐᵤₛ wird bevorzugt im Abgas, insbesondere nach einem letzten Wehr beziehungswiese in einer letzten Teilzone, bevorzugt mit einem Thermoelement, gemessen.

Bevorzugt wird die Wirbelschicht von einem Einlass des entwässerten Pfropfcopolymers B zu einem Auslass des getrockneten Pfropfcopolymers B bewegt und die Endtemperatur Tₐᵤₛ wird insbesondere am Auslass gemessen. Ein Thermoelement ist insbesondere jeweils am Einlass und am Auslass in der Wirbelschicht angeordnet, also dort, wo das entwässerte Pfropfcopolymer B in die Wirbelschicht eintritt beziehungsweise das getrocknete Pfropfcopolymer B aus der Wirbelschicht austritt oder die Wirbelschicht einen Bereich, insbesondere im Fließbetttrockner, in dem das kontinuierliche Trocknen von Schritt c) durchgeführt wird, verlässt. Alternativ kann die Endtemperatur Tₐᵤₛ an einem Abgasauslass im Abgas gemessen werden.

Bevorzugt beträgt der Sollwert ΔTₛₒₗₗ mindestens 5°C, weiter bevorzugt liegt der Sollwert ΔTₛₒₗₗ in einem Bereich von 5°C bis 50°C, mehr bevorzugt von 5°C bis 20°C. Bevorzugt ist der Sollwert ΔTₛₒₗₗ über die Zeit konstant und weicht mehr bevorzugt weniger als 30%, insbesondere weniger als 10%, bezogen auf einen Mittelwert des Sollwerts ΔTₛₒₗₗ, über die Zeit ab. Bevorzugt liegt die Anfangstemperatur Tₑᵢₙ in einem Bereich von 20°C bis 50°C, insbesondere von 25°C bis 40°C.

Ein konstanter Sollwert ΔTₛₒₗₗ dient der Konstanz des Wassergehalts und des Restmonomerengehalts im getrockneten Pfropfcopolymer B. Die Konstanz des Wassergehalts im getrockneten Pfropfcopolymer B ist für den Gehalt des Pfropfcopolymers B im Endprodukt der thermoplastischen Formmasse von Bedeutung, da die Zufuhr des getrockneten Pfropfcopolymers B in den bevorzugten Vermischungsschritt d), in dem das thermoplastische Copolymer A und das getrocknete Pfropfcopolymer B vermischt werden, insbesondere gravimetrisch geregelt ist, also der Massenstrom des getrockneten Pfropfcopolymers B eingestellt wird. Bei variablem Wassergehalt des getrockneten Pfropfcopolymers B wird bei konstantem Massenstrom eine variable Wassermenge und entsprechend eine variable Menge an Trockenmasse des Pfropfcopolymers B zugeführt. In dem getrockneten Pfropfcopolymer B noch enthaltenes Wasser wird bevorzugt in dem Vermischungsschritt d), der zum Beispiel in einem Extruder ausgeführt wird, vollständig entfernt. Ein konstanter Gehalt an Restmonomeren im getrockneten Pfropfcopolymer B führt auch zu einem konstanten Gehalt an Restmonomeren in der thermoplastischen Formmasse, die das Pfropfcopolymer B und das thermoplastische Copolymer A umfasst.

Weiterhin kann das getrocknete Pfropfcopolymer B, erhalten in Schritt c), gekühlt werden. Das Kühlen kann in einer weiteren Zone, die auch als Kühlzone bezeichnet werden kann, des Fließbetttrockners erfolgen oder in einem separaten Apparat. Der separate Apparat kann ein Fließbettapparat sein. Insbesondere liegt das getrocknete Pfropfcopolymer B in einem Kühlschritt c') als Wirbelschicht vor.

Die Kühlzone ist dadurch gekennzeichnet, dass die Wirbelschicht eine geringere Temperatur als in der vorhergehenden Zone aufweist. Die Kühlzone ist bevorzugt durch ein Wehr von einer vorhergehenden Trocknungszone abgegrenzt. Liegt in dem Fließbetttrockner eine Kühlzone vor, so wird die Endtemperatur Tₐᵤₛ der Wirbelschicht gemäß Schritt c) ii. am Ende einer letzten Trocknungszone, die auch als beheizte Zone bezeichnet werden kann, gemessen.

Entsprechend kann zwischen dem Schritt c) und dem Schritt d) der Kühlschritt c') ausgeführt werden. In dem Kühlschritt c') kann ein Kühl-Gas zugeführt werden, das bevorzugt eine Temperatur von maximal 50°C, weiter bevorzugt maximal 40°C aufweist. Durch den Kühlschritt c') kann ein Zusammenbacken und/oder Kompaktieren des partikelförmigen getrockneten Pfropfcopolymers B vermindert werden. Im Kühlschritt c') bleibt der Wassergehalt des getrockneten Pfropfcopolymers B im Wesentlichen unverändert. In einer bevorzugten Ausführungsform umfasst Schritt c') das Abkühlen des getrockneten Pfropfcopolymers B nach der Trocknung auf eine Temperatur von kleiner als 50°C, weiter bevorzugt auf eine Temperatur in einem Bereich von 20 bis 50°C, insbesondere durch einen Kühlgas-Strom. Beispielsweise kann das getrocknete Pfropfcopolymer B an einem Kopf des Fließbetttrockners durch einen Kühlgas-Strom, beispielsweise Luft, abgekühlt werden. Die Temperatur des Kühlgas-Stroms beträgt beispielsweise 10°C bis 40°C, bevorzugt 15°C bis 25°C.

Zwischen dem Trocknungsschritt c) und dem Kühlschritt c') kann eine Verweilzeitzone eingerichtet sein, die mit einer konstanten, in der Verweilzeitzone nicht geregelten Temperatur T_{G,VW} des Trocknungsgases betrieben wird.

Die Temperatur T_{G,VW} des Trocknungsgases in der Verweilzeitzone liegt bevorzugt in einem Bereich von 30°C bis 100°C, weiter bevorzugt in einem Bereich von 40°C bis 80°C. Diese Zone kann einer weiteren Reduktion der Restmonomere dienen.

Durch den erfindungsgemäßen Trocknungsschritt ist es insbesondere möglich eine besonders schnelle und gleichmäßige Trocknung zu erreichen. Der erfindungsgemäße Trocknungsschritt gewährleistet insbesondere einen schnellen und effektiven Wärmeübergang zwischen dem Trocknungsgas und dem zu trocknenden Pfropfcopolymer B, wobei aber andererseits hohe Tempertaturen des zu trocknenden Pfropfcopolymer B selbst vermieden werden.

Bevorzugt wird das Trocknen in Schritt c) mittels eines Trocknungsgases ausgewählt aus Luft und/oder Stickstoff durchgeführt, wobei das Trocknen unter Verwendung eines Fließbetttrockners durchgeführt wird und das Trocknungsgas eine Temperatur im Bereich von 50°C bis 160°C, bevorzugt 55°C bis 140°C, besonders bevorzugt 60°C bis 120°C, aufweist.

Weiterhin bevorzugt wird das Trocknen in Schritt c) mittels eines Trocknungsgases ausgewählt aus Luft und/oder Stickstoff durchgeführt, wobei das Trocknen unter Verwendung eines Fließbetttrockners, welcher mindestens einen in das Fließbett integrierten Wärmetauscher aufweist, durchgeführt wird, wobei das Trocknungsgas eine Temperatur im Bereich von 50°C bis 160°C, bevorzugt 55°C bis 140°C, besonders bevorzugt 60°C bis 120°C, aufweist, und wobei der mindestens eine Wärmetauscher mit einer Temperaturen im Bereich von 55°C bis 165°C, bevorzugt 60°C bis 145°C, besonders bevorzugt 65°C bis 125°C, betrieben wird.

Insbesondere bevorzugt wird das Trocknen in Schritt c) mittels eines Trocknungsgases ausgewählt aus Luft und/oder Stickstoff durchgeführt, wobei das Trocknen unter Verwendung eines Fließbetttrockners, bevorzugt eines Fließbetttrockners, welcher mindestens einen ins Fließbett integrierten Wärmetauscher aufweist, durchgeführt wird, das Trocknungsgas eine Temperatur im Bereich von 50 bis 160°C, bevorzugt 50 bis 120°C, aufweist und die mittlere Verweilzeit des Pfropfcopolymers B im Fließbetttrockner 1 bis 60 min, bevorzugt 5 bis 50 min, besonders bevorzugt 10 bis 40 min, beträgt.

In einer bevorzugten Ausführungsform der Erfindung wird die oben beschriebene Trocknung für weitere 10 bis 30 min, bevorzugt 15 bis 20 min, insbesondere in der Verweilzeitzone, fortgeführt, ab dem Zeitpunkt, an dem ein Wassergehalt von 10 Gew.-%, bevorzugt von 7,5 Gew.-%, insbesondere bevorzugt von 5 Gew.-% (oder kleiner), erreicht wird.

In einer weiter bevorzugten Ausführungsform der Erfindung wird die oben beschriebene Trocknung, insbesondere in der Verweilzeitzone, für weitere 5 bis 30 min, bevorzugt 5 bis 25 min fortgeführt, ab dem Zeitpunkt, an dem ein Wassergehalt von 2 Gew.-%, bevorzugt von 1 Gew.-%, insbesondere bevorzugt von 0,5 Gew.-% (oder kleiner), erreicht wird.

Der Massenstrom an Trocknungsgas beträgt beim Trocknen in Schritt c) und/oder in der Verweilzeitzone und/oder im Kühlschritt c') bevorzugt das 1- bis 80-fache, weiter bevorzugt das 2- bis 50-fache des Massenstroms an Pfropfcopolymer B, bezogen auf das getrocknete Pfropfcopolymer B.

In einer bevorzugten Ausführungsform weist das getrocknete Pfropfcopolymer B einen Wassergehalt im Bereich von 0,01 bis 1 Gew.-%, bevorzugt 0,1 bis 0,8 Gew.-%, insbesondere bevorzugt 0,1 bis 0,5 Gew.-%, besonderes bevorzugt 0,2 bis 0,4 Gew.-%, auf, jeweils bezogen auf das, insbesondere gesamte, getrocknete Pfropfcopolymer B.

Durch den erfindungsgemäßen Trocknungsschritt ist es zum Beispiel möglich, den Gesamtgehalt an Reststyrol im Pfropfcopolymer B basierend auf einem Acrylester-Styrol-Acrylnitril-Copolymer (ASA) auf einen Wert kleiner als 500 ppm, bevorzugt kleiner als 400 ppm, weiter bevorzugt kleiner als 300 ppm, und den Gesamtgehalt an Restacrylnitril im Pfropfcopolymer B basierend auf einem Acrylester-Styrol-Acrylnitril-Copolymer (ASA) auf einen Wert kleiner als 100 ppm, bevorzugt kleiner als 75 ppm, weiter bevorzugt kleiner als 50 ppm, jeweils bezogen auf das trockene Pfropfcopolymer B, zu vermindern.

Unter Restmonomeren sind nicht umgesetzte Monomere und deren Umwandlungsprodukte sowie Oligomere zu verstehen. Insbesondere umfasst der Gesamtgehalt an Restmonomeren im Pfropfcopolymer B basierend auf einem Acrylester-Styrol-Acrylnitril-Copolymer (ASA) den Gehalt an Styrol, Acrylnitril, Butylacrylat und Ethylbenzol, bevorzugt den Gehalt an Acrylnitril und Styrol, im Polymer.

In einer bevorzugten Ausführungsform weist das getrocknete Pfropfcopolymer B basierend auf einem Acrylester-Styrol-Acrylnitril-Copolymer (ASA) einen Wassergehalt im Bereich von 0,05 bis 0,6 Gew.-%, insbesondere bevorzugt 0,1 bis 0,5 Gew.-%, besonderes bevorzugt 0,1 bis 0,4 Gew.-%, und einen Gesamtgehalt an Reststyrol im Pfropfcopolymer B basierend auf einem Acrylester-Styrol-Acrylnitril-Copolymer (ASA) von kleiner als 500 ppm, bevorzugt kleiner als 400 ppm, weiter bevorzugt kleiner als 300 ppm, und einen Gesamtgehalt an Restacrylnitril im Pfropfcopolymer B basierend auf einem Acrylester-Styrol-Acrylnitril-Copolymer (ASA) von kleiner als 100 ppm, bevorzugt kleiner als 75 ppm, weiter bevorzugt kleiner als 50 ppm, jeweils bezogen auf das trockene Pfropfcopolymer B, auf.

Durch den erfindungsgemäßen Trocknungsschritt ist es insbesondere möglich den Gesamtgehalt an Restmonomeren, insbesondere Styrol, im Pfropfcopolymer B basierend auf einem Polybutadien (ABS) auf einen Wert kleiner oder gleich 2.000 ppm, insbesondere kleiner oder gleich 1.000 ppm, jeweils bezogen auf das trockene Pfropfcopolymer B, zu vermindern.

Insbesondere umfasst der Gesamtgehalt an Restmonomeren im Pfropfcopolymer B basierend auf einem Polybutadien (ABS) den Gehalt an Styrol, Acrylnitril, Butadien und 4-Vinylcyclohexen (VCH), bevorzugt den Gehalt an Acrylnitril, Styrol und 4-Vinylcyclohexen, besonders bevorzugt den Gehalt an Styrol und 4-Vinylcyclohexen, im Pfropfcopolymer B.

In einer bevorzugten Ausführungsform weist das getrocknete Pfropfcopolymer B basierend auf einem Polybutadien (ABS) und erhalten in Schritt c) einen Wassergehalt im Bereich von 0,05 bis 0,8 Gew.-%, bevorzugt 0,1 bis 0,5 Gew.-%, besonderes bevorzugt 0,1 bis 0,3 Gew.-%, und einen Gesamtgehalt an Reststyrol von kleiner oder gleich 2.000 ppm, bevorzugt von kleiner oder gleich 1.000 ppm, insbesondere im Bereich von 10 bis 2.000 ppm, bevorzugt von 20 bis 1.000 ppm, jeweils bezogen auf das trockene Pfropfcopolymer B, auf.

Der Ausdruck "ppm" bedeutet im Sinne der vorliegenden Anmeldung "mg/kg".

### Schritt d)

Der Schritt d) umfasst das Vermischen des thermoplastischen Copolymers A, des getrockneten Pfropfcopolymers B aus Schritt c), optional der weiteren polymeren Komponente(n) (C) und optional der weiteren Komponente(n) K.

Bevorzugt umfasst Schritt d) das Vermischen des thermoplastischen Copolymers A, des gefällten, entwässerten und getrockneten Pfropfcopolymers B, optional der weiteren polymeren Komponente C, und optional der mindestens einen weiteren Komponente K, bevorzugt ausgewählt aus Füllstoffen, Additiven und Hilfsmitteln. Bevorzugt erfolgt dieses Vermischen in einem Extruder.

Die Verfahren und Vorrichtungen zur Durchführung des Schritts d) sind dem Fachmann bekannt. Typischerweise umfasst Schritt d) das Schmelzecompoundieren und/oder das Schmelzextrudieren und wird bevorzugt in Innenknetern, Extrudern und/oder Doppelwellenschnecken durchgeführt.

Bevorzugt erfolgt das Vermischen in Schritt d) bei Temperaturen von 200°C bis 300°C.

Das Vermischen des thermoplastischen Copolymers A, des mindestens einen getrockneten Pfropfcopolymers B aus Schritt c) und optional weiteren Komponenten K kann in bekannter Weise sowohl sukzessive als auch simultan erfolgen. Es ist zudem möglich, dass zunächst einige Komponenten bei Temperaturen von 15°C bis 40°C, insbesondere bei Raumtemperatur (etwa 20°C) vermischt werden und später die Temperatur auf 200°C bis 300°C, optional unter Zugabe weiterer Komponenten, erhöht wird.

Die Zusammensetzung der erfindungsgemäßen thermoplastischen Formmasse ist oben im Zusammenhang mit dem erfindungsgemäßen Verfahren beschrieben.

Die erfindungsgemäßen Formmassen können zur Herstellung von Formteilen und/oder Folien jeder Art verwendet werden. Diese können durch Spritzguss, Extrusion (Führrohre, Profile, Fasern, Folien und Platten) und Blasformverfahren sowie Kalandrieren und Walzen (für Platten und Folien) hergestellt werden. Eine weitere Form der Verarbeitung ist die Herstellung von Formteilen durch Tiefziehen aus zuvor hergestellten Platten oder Folien und das Verfahren der Folien-Hinterspritzung. Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; Automobilaußen- und -innenteilen; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Insbesondere können die erfindungsgemäßen Formmassen beispielsweise zur Herstellung von folgenden Formteilen verwendet werden: Innenausbauteile für Schienenfahrzeuge, Schiffe, Flugzeuge, Busse und andere Kraftfahrzeuge, Karosserieaußenteile im Kfz-Bereich, Gehäuse von Kleintransformatoren enthaltenden Elektrogeräten, Gehäuse für Geräte zur Informationsverarbeitung und -übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Vorrichtung zur Haltung oder Versorgung von Kleintieren, Formteile für Sanitär- und Badausrüstungen, Abdeckgitter für Lüfter-Öffnungen, Formteile für Garten- und Gerätehäuser und Gehäuse für Gartengeräte.

Die oben beschriebenen Ausführungsformen betreffend die thermoplastische Formmasse, insbesondere das thermoplastische Copolymer A und das Pfropfcopolymer B, und betreffend die Verfahrensschritte a) bis d) gelten in entsprechender Weise für die erfindungsgemäße Formmasse und daraus hergestellte Formteile.

### Kurze Beschreibung der Zeichnungen

Ausführungsbeispiele der Erfindung sind in der Zeichnung dargestellt und werden in der nachfolgenden Beschreibung näher erläutert.

Es zeigt:

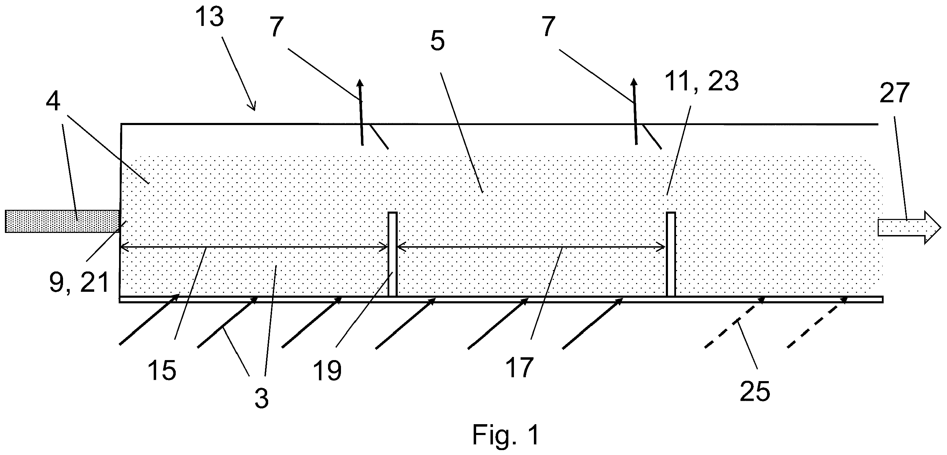

- Figur 1: eine schematische Darstellung einer kontinuierlichen Trocknung in einem Fließbetttrockner.

Figur 1 zeigt schematisch eine kontinuierliche Trocknung eines entwässerten Pfropfcopolymers B 4 in einem Fließbetttrockner 13. Ein Trocknungsgas 3 und das entwässerte Pfropfcopolymer B 4 werden dem Fließbetttrockner 13 zugeführt, wobei das entwässerte Pfropfcopolymer B 4 in dem Fließbetttrockner 13 durch das Trocknungsgas 3 bewegt wird und eine Wirbelschicht 5 bildet. Durch die in der gezeigten Ausführungsform schräge Zuführung des Trocknungsgases 3 wird die Wirbelschicht 5 in dem Fließbetttrockner 13 in einer horizontalen Förderrichtung 27 transportiert und aus der Wirbelschicht 5 wird ein Abgas 7 abgeführt. Durch das fluidische Verhalten der Wirbelschicht 5 ist alternativ auch eine vertikale Zuführung des Trocknungsgases 3 möglich.

Bei einer Zufuhr 9 des entwässerten Pfropfcopolymers B 4 an einem Einlass 21 in die Wirbelschicht 5 wird eine Anfangstemperatur Tₑᵢₙ der Wirbelschicht 5 gemessen. Weiterhin wird eine Endtemperatur Tₐᵤₛ der Wirbelschicht 5 bei einer Abfuhr 11 des getrockneten Pfropfcopolymers B 4 an einem Auslass 23 aus der Wirbelschicht 5 gemessen. Aus der Endtemperatur Tₐᵤₛ und der Anfangstemperatur Tₑᵢₙ wird eine Differenz ΔTᵢₛₜ gebildet, die als Regelgröße für die kontinuierliche Trocknung dient. Entsprechend einem Vergleich der Differenz ΔTᵢₛₜ mit einem definierten Sollwert ΔTₛₒₗₗ wird ein Massenstrom an zugeführtem Trocknungsgas 3 und/oder eine Zuführtemperatur T_{G,zu} des Trocknungsgases 3 eingestellt.

In der dargestellten Ausführungsform ist die Wirbelschicht 5 in eine erste Teilzone 15 und eine zweite Teilzone 17 durch ein Wehr 19 unterteilt. Weiterhin schließt sich in der dargestellten Ausführungsform an die zweite Teilzone 17 ein Kühlbereich an, in dem ein Kühlgas 25 anstelle des Trocknungsgases 3 zugeführt wird.

Die Erfindung ist nicht auf die hier beschriebenen Ausführungsbeispiele beschränkt. Vielmehr ist innerhalb des durch die Ansprüche angegebenen Bereichs eine Vielzahl von Abwandlungen möglich. Die Erfindung wird durch die nachfolgenden Beispiele, Figur und Ansprüche weiter erläutert.

### Beispiele

Zur kontinuierlichen Trocknung eines ASA-Pfropfcopolymers B wurde ein Fließbetttrockner mit einer Lochbodenfläche von 0,24 m² eingesetzt, dem entwässertes Pfropfcopolymer B zugeführt wurde. Ein Trocknungsgas wurde mit einem Volumenstrom von 8 m³/min zugeführt. Die mittlere Verweilzeit des Pfropfcopolymers B in der Wirbelschicht betrug 20 Minuten. Sowohl am Anfang als auch am Ende des Fließbetts, also am Einlass und am Auslass des Pfropfcopolymers B, wurde jeweils eine Temperaturmessung in der Wirbelschicht durchgeführt.

Fünf Beispiele (B) und drei Vergleichsbeispiele (VB) sind in Tabelle 1 dargestellt. Ein erstes Pfropfcopolymer B I mit einem mittleren Partikeldurchmesser von 98 nm wies vor der Trocknung einen Gehalt an Restmonomeren von 808 ppm auf. Ein zweites Pfropfcopolymer B II mit einem mittleren Partikeldurchmesser von 550 nm wies vor der Trocknung einen Gehalt an Restmonomeren von 821 ppm auf.

**Tabelle 1**

| Beispiel | Pfropfcopolymer B Einlass [kg/h] | Wassergehalt Einlass [Gew.-%] | Tₑᵢₙ [°C] | T_{G.zu} [°C] |
|---|---|---|---|---|
| VB I.1 | 15 | 31 | 36 | 80 |
| VB I.2 | 18 | 31 | 36 | 80 |
| B I.1 | 15 | 34 | 36 | 90 |
| B I.2 | 15 | 31 | 36 | 87 |
| B I.3 | 15 | 31 | 36 | 93 |
| | | | | |
| VB II | 15 | 36 | 35 | 85 |
| B II.1 | 15 | 36 | 35 | 92 |
| B II.2 | 15 | 36 | 35 | 96 |

**Tabelle 1 Fortsetzung**

| Beispiel | Tₐᵤₛ [°C] | ΔTᵢₛₜ [°C] | WasserGehalt Auslass [Gew.-%] | Restmonomer-Gehalt Auslass [ppm] |
|---|---|---|---|---|
| VB I.1 | 36 | 0 | 2 | 192 |
| VB I.2 | 36 | 0 | 5 | 510 |
| B I.1 | 41 | 5 | 1 | <20 |
| B I.2 | 41 | 5 | 1 | <20 |
| B I.3 | 50 | 14 | 0,7 | <20 |
| | | | | |
| VB II | 36 | 1 | 3 | 212 |
| B II.1 | 40 | 5 | 1 | <20 |
| B II.2 | 50 | 15 | 0,6 | <20 |

Im Gegensatz zu den Vergleichsbeispielen konnte der Gehalt an Restmonomeren in dem getrockneten Pfropfcopolymer B mit einem ausreichend großen ΔTᵢₛₜ unabhängig von dem Wassergehalt des zugeführten entwässerten Pfropfcopolymers B konstant auf weniger als 20 ppm reduziert werden. Ein ΔTᵢₛₜ von hier mindestens 5°C führte zu einer signifikanten Reduktion des Gehalts an Restmonomeren und zu einem konstant niedrigen Wassergehalt im Pfropfcopolymer B am Auslass.

Aus dem auf diese Weise vorteilhaft getrockneten Pfropfcopolymer B werden z.B. mit einer SAN-Matrix thermoplastische Formmassen und Formteile hergestellt, die gute mechanische und optische Eigenschaften aufweisen und keinen unangenehmen Geruch haben.

### Bezugszeichenliste

- 3: Trocknungsgas
- 4: Pfropfcopolymer B
- 5: Wirbelschicht
- 7: Abgas
- 9: Zufuhr
- 11: Abfuhr
- 13: Fließbetttrockner
- 15: Erste Teilzone
- 17: Zweite Teilzone
- 19: Wehr
- 21: Einlass
- 23: Auslass
- 25: Kühlgas
- 27: Förderrichtung

## Patentansprüche

1. Verfahren zur Herstellung einer thermoplastischen Formmasse enthaltend mindestens ein thermoplastisches Copolymer A und mindestens ein Pfropfcopolymer B (4), umfassend folgende Schritte:
a) Fällen des mindestens einen Pfropfcopolymers B (4) nach einer Emulsionspolymerisation durch Zugabe einer Fällungslösung;
b) Entwässern des gefällten Pfropfcopolymers B (4), bevorzugt mittels Zentrifugation und/oder Filtration, wobei ein entwässertes Pfropfcopolymer B (4) mit einem Wassergehalt von kleiner oder gleich 50 Gew.-% erhalten wird;
c) kontinuierliches Trocknen des entwässerten Pfropfcopolymers B (4), wobei ein Trocknungsgas (3) und das entwässerte Pfropfcopolymer B (4) zugeführt werden, das entwässerte Pfropfcopolymer B (4) durch das Trocknungsgas (3) bewegt wird und eine Wirbelschicht (5) bildet, das Trocknungsgas (3) eine Zuführtemperatur T_{G,zu} im Bereich von 50°C bis 160°C aufweist und getrocknetes Pfropfcopolymer B (4) und ein Abgas (7) abgeführt werden, wobei
i. eine Anfangstemperatur Tₑᵢₙ der Wirbelschicht (5) bei Zufuhr (9) des entwässerten Pfropfcopolymers B (4) gemessen wird,
ii. eine Endtemperatur Tₐᵤₛ der Wirbelschicht (5) bei Abfuhr (11) des getrockneten Pfropfcopolymers B (4) und/oder des Abgases (7) gemessen wird,
iii. eine Differenz ΔTᵢₛₜ zwischen der gemessenen Endtemperatur Tₐᵤₛ und der gemessen Anfangstemperatur Tₑᵢₙ gebildet wird und die Differenz ΔTᵢₛₜ mit einem Sollwert ΔTₛₒₗₗ, der mindestens 2°C beträgt, verglichen wird und
iv. die Endtemperatur Tₐᵤₛ angepasst wird, indem
- ein Massenstrom an zugeführtem Trocknungsgas (3) und/oder die Zuführtemperatur T_{G,zu} des Trocknungsgases (3) erhöht wird, wenn die Differenz ΔTᵢₛₜ kleiner als der Sollwert ΔTₛₒₗₗ ist oder
- ein Massenstrom an zugeführtem Trocknungsgas (3) und/oder die Zuführtemperatur T_{G,zu} des Trocknungsgases (3) verringert wird, wenn die Differenz ΔTᵢₛₜ größer als der Sollwert ΔTₛₒₗₗ ist;
d) gegebenenfalls Vermischen des thermoplastischen Copolymers A, des getrockneten Pfropfcopolymers B (4), optional weiterer polymerer Komponente(n) C und optional weiterer Komponente(n) K.

2. Verfahren nach Anspruch 1, **dadurch gekennzeichnet, dass** in Schritt c) ein Fließbetttrockner (13) zum Trocknen eingesetzt wird.

3. Verfahren nach Anspruch 1 oder 2, **dadurch gekennzeichnet, dass** die Wirbelschicht (5) in mindestens zwei Teilzonen (15, 17), insbesondere durch mindestens ein Wehr (19), unterteilt ist.

4. Verfahren nach einem der Ansprüche 1 bis 3, **dadurch gekennzeichnet, dass** die Wirbelschicht (5) von einem Einlass (21) des entwässerten Pfropfcopolymers B (4) zu einem Auslass (23) des getrockneten Pfropfcopolymers B (4) bewegt wird und die Endtemperatur Tₐᵤₛ insbesondere am Auslass (23) gemessen wird.

5. Verfahren nach einem der Ansprüche 1 bis 4, **dadurch gekennzeichnet, dass** der Sollwert ΔTₛₒₗₗ mindestens 5°C beträgt und insbesondere in einem Bereich von 5°C bis 50°C liegt.

6. Verfahren nach einem der Ansprüche 1 bis 5, **dadurch gekennzeichnet, dass** die Anfangstemperatur Tₑᵢₙ in einem Bereich von 20°C bis 50°C, insbesondere von 25°C bis 40°C, liegt.

7. Verfahren nach einem der Ansprüche 1 bis 6, **dadurch gekennzeichnet, dass** das entwässerte Pfropfcopolymer B (4) in Schritt c) mit einem variablen Massenstrom zugeführt wird.

8. Verfahren nach einem der Ansprüche 1 bis 7, **dadurch gekennzeichnet, dass** das entwässerte Pfropfcopolymer B (4) in Schritt c) mit einem variablen Wassergehalt zugeführt wird.

9. Verfahren nach einem der Ansprüche 1 bis 8, **dadurch gekennzeichnet, dass** der Sollwert ΔTₛₒₗₗ über die Zeit konstant ist.

10. Verfahren nach einem der Ansprüche 1 bis 9, **dadurch gekennzeichnet, dass** das entwässerte Pfropfcopolymer B (4) in Schritt c) mit einem Wassergehalt in einem Bereich von 5 Gew.-% bis 45 Gew.-%, insbesondere 15 Gew.-% bis 40 Gew.-%, zugeführt wird, bezogen auf das entwässerte Pfropfcopolymer B (4).

11. Verfahren gemäß einem der Ansprüche 1 bis 10, **dadurch gekennzeichnet, dass** das Pfropfcopolymer B (4) auf einem Acrylester-Styrol-Acrylnitril-Copolymer oder auf einem Polybutadien basiert.

12. Verfahren gemäß einem der Ansprüche 1 bis 11, **dadurch gekennzeichnet, dass** das getrocknete Pfropfcopolymer B (4) erhalten in Schritt c) auf einem Acrylester-Stryrol-Acrylnitril-Copolymer (ASA) basiert und einen Wassergehalt im Bereich von 0,05 bis 0,6 Gew.-%, einen Gesamtgehalt an Styrol von kleiner 500 ppm und einen Gesamtgehalt an Acrylnitril von kleiner 100 ppm aufweist, jeweils bezogen auf das trockene Pfropfcopolymer B, oder
das getrocknete Pfropfcopolymer B (4) erhalten in Schritt c) auf einem Polybutadien (ABS) basiert und einen Wassergehalt im Bereich von 0,05 bis 0,8 Gew.-% und einen Gesamtgehalt an Styrol von kleiner oder gleich 2.000 ppm aufweist, jeweils bezogen auf das trockene Pfropfcopolymer B (4).

13. Verfahren gemäß einem der Ansprüche 1 bis 12, **dadurch gekennzeichnet, dass** das getrocknete Pfropfcopolymer B (4) erhalten in Schritt c) gekühlt wird.

## Claims

1. A process for producing a thermoplastic molding composition comprising at least one thermoplastic copolymer A and at least one graft copolymer B (4), comprising the following steps:
a) precipitating the at least one graft copolymer B (4) after an emulsion polymerization, by adding a precipitation solution;
b) dewatering the precipitated graft copolymer B (4), preferably by centrifugation and/or filtration, affording a dewatered graft copolymer B (4) having a water content of less than or equal to 50% by weight;
c) continuously drying the dewatered graft copolymer B (4), wherein a drying gas (3) and the dewatered graft copolymer B (4) are supplied, the dewatered graft copolymer B (4) is moved by the drying gas (3) and forms a fluidized bed (5), the drying gas (3) has an feed temperature T_{G,zu} in the range from 50°C to 160°C, and dried graft copolymer B (4) and an off-gas (7) are discharged, wherein
i. a starting temperature Tₑᵢₙ of the fluidized bed (5) is measured at the feed (9) of the dewatered graft copolymer B (4),
ii. an end temperature Tₐᵤₛ of the fluidized bed (5) is measured at the removal (11) of the dried graft copolymer B (4) and/or of the off-gas (7),
iii. a difference ΔTᵢₛₜ between the measured end temperature Tₐᵤₛ and the measured starting temperature Tₑᵢₙ is calculated and the difference ΔTᵢₛₜ is compared with a nominal value ΔTₛₒₗₗ which is in particular at least 2°C, and
iv. the end temperature Tₐᵤₛ is adjusted by
- increasing a mass flow of supplied drying gas (3) and/or the feed temperature T_{G,zu} of the drying gas (3) when the difference ΔTᵢₛₜ is smaller than the nominal value ΔTₛₒₗₗ or
- decreasing a mass flow of supplied drying gas (3) and/or the feed temperature T_{G,zu} of the drying gas (3) when the difference ΔTᵢₛₜ is greater than the nominal value ΔTₛₒₗₗ;
d) optionally mixing of the thermoplastic copolymer A, the dried graft copolymer B (4), optionally further polymeric component(s) C, and optionally further component(s) K.

2. Process according to claim 1, **characterized in that** a fluid-bed dryer (13) is employed for the drying in step c).

3. Process according to claim 1 or 2, **characterized in that** the fluidized bed (5) is divided into at least two sub-zones (15, 17), in particular by at least one weir (19).

4. Process according to any of claims 1 to 3, **characterized in that** the fluidized bed (5) moves from an inlet (21) of the dewatered graft copolymer B (4) to an outlet (23) of the dried graft copolymer B (4) and that the end temperature Tₐᵤₛ is measured in particular at the outlet (23).

5. Process according to any of claims 1 to 4, **characterized in that** the nominal value ΔTₛₒₗₗ is at least 5°C and is in particular within a range from 5°C to 50°C.

6. Process according to any of claims 1 to 5, **characterized in that** the starting temperature Tₑᵢₙ is within a range from 20°C to 50°C, in particular from 25°C to 40°C.

7. Process according to any of claims 1 to 6, **characterized in that** the dewatered graft copolymer B (4) is supplied in step c) with a variable mass flow.

8. Process according to any of claims 1 to 7, **characterized in that** the dewatered graft copolymer B (4) is supplied in step c) with a variable water content.

9. Process according to any of claims 1 to 8, **characterized in that** the nominal value ΔTₛₒₗₗ is constant over time.

10. Process according to any of claims 1 to 9, **characterized in that** the dewatered graft copolymer B (4) is supplied in step c) with a water content within a range from 5% by weight to 45% by weight, in particular 15% by weight to 40% by weight, based on the dewatered graft copolymer B (4).

11. Process according to any of claims 1 to 10, **characterized in that** the graft copolymer B (4) is based on an acrylic ester-styrene-acrylonitrile copolymer or on a polybutadiene.

12. Process according to any of claims 1 to 11, **characterized in that** the dried graft copolymer B (4) obtained in step c) is based on an acrylic ester-styrene-acrylonitrile copolymer (ASA) and has a water content in the range from 0.05% to 0.6% by weight, a total content of styrene of less than 500 ppm, and a total content of acrylonitrile of less than 100 ppm, in each case based on the dry graft copolymer B, or
the dried graft copolymer B (4) obtained in step c) is based on a polybutadiene (ABS) and has a water content in the range from 0.05% to 0.8% by weight and a total content of styrene of less than or equal to 2000 ppm, in each case based on the dry graft copolymer B (4).

13. Process according to any of claims 1 to 12, **characterized in that** the dewatered graft copolymer B (4) obtained in step c) is cooled.

## Revendications

1. Procédé de fabrication d'un mélange à mouler thermoplastique contenant au moins un copolymère thermoplastique A et au moins un copolymère greffé B (4), comprenant les étapes suivantes :
a) précipitation de l'au moins un copolymère greffé B (4) après une polymérisation en émulsion par addition d'une solution de précipitation ;
b) déshydratation du copolymère greffé B (4) précipité, de préférence par centrifugation et/ou filtration, avec obtention d'un copolymère greffé B (4) déshydraté ayant une teneur en eau inférieure ou égale à 50 % en poids ;
c) séchage continu du copolymère greffé B (4) déshydraté, avec amenée d'un gaz de séchage (3) et du copolymère greffé B (4) déshydraté, déplacement du copolymère greffé B (4) déshydraté à travers le gaz de séchage (3) et formant un lit fluidisé (5), le gaz de séchage (3) présentant une température d'amenée T_{G,zu} dans la plage de 50 °C à 160 °C, et évacuation du copolymère greffé B (4) séché et d'un effluent gazeux (7), dans lequel
i. on mesure une température initiale Tₑᵢₙ du lit fluidisé (5) lors de l'amenée (9) du copolymère greffé B (4) déshydraté,
ii. on mesure une température finale Tₐᵤₛ du lit fluidisé (5) lors de l'évacuation (11) du copolymère greffé B (4) séché et/ou de l'effluent gazeux (7),
iii. on forme une différence ΔTᵢₛₜ entre la température finale mesurée Tₐᵤₛ et la température initiale mesurée Tₑᵢₙ, et on compare la différence ΔTᵢₛₜ à une valeur de consigne ΔTₛₒₗₗ, qui est d'au moins 2 °C et
iv. on ajuste la température finale Tₐᵤₛ
- en augmentant un débit massique du gaz de séchage amené (3) et/ou la température d'amenée T_{G,zu} du gaz de séchage (3) quand la différence ΔTᵢₛₜ est inférieure à la valeur de consigne ΔTₛₒₗₗ ou
- on diminue un débit massique du gaz de séchage amené (3) et/ou de la température d'amenée T_{G,zu} du gaz de séchage (3) quand la différence ΔTᵢₛₜ est supérieure à la valeur de consigne ΔTₛₒₗₗ ;
d) éventuellement, mélange du copolymère thermoplastique A, du copolymère greffé B (4) séché, éventuellement d'autres composants polymères C et éventuellement d'autres composants K.

2. Procédé selon la revendication 1, **caractérisé en ce que** dans l'étape c), on utilise pour le séchage un séchoir à lit fluidisé (13).

3. Procédé selon la revendication 1 ou 2, **caractérisé en ce que** le lit fluidisé (5) est subdivisé en au moins deux zones partielles (15, 17), en particulier par une barrière réglable (19).

4. Procédé selon l'une des revendications 1 à 3, **caractérisé en ce que** le lit fluidisé (5) se déplace d'une entrée (21) du polymère greffé B (4) déshydraté à une sortie (23) du copolymère greffé B (4) séché, et que la température finale Tₐᵤₛ est mesurée en particulier à la sortie (23).

5. Procédé selon l'une des revendications 1 à 4, **caractérisé en ce que** la valeur de consigne ΔTₛₒₗₗ est d'au moins 5 °C et est en particulier comprise dans la plage de 5 °C à 50 °C.

6. Procédé selon l'une des revendications 1 à 5, **caractérisé en ce que** la température initiale Tₑᵢₙ est comprise dans la plage de 20 °C à 50 °C, en particulier de 25 °C à 40 °C.

7. Procédé selon l'une des revendications 1 à 6, **caractérisé en ce que** le copolymère greffé B (4) déshydraté est dans l'étape c) amené avec un débit massique variable.

8. Procédé selon l'une des revendications 1 à 7, **caractérisé en ce que** le copolymère greffé B (4) déshydraté est dans l'étape c) amené avec une teneur en eau variable.

9. Procédé selon l'une des revendications 1 à 8, **caractérisé en ce que** la valeur de consigne ΔTₛₒₗₗ est constante dans le temps.

10. Procédé selon l'une des revendications 1 à 9, **caractérisé en ce que** le copolymère greffé B (4) déshydraté est dans l'étape c) amené avec une teneur en eau dans la plage de 5 % en poids à 45 % en poids, en particulier de 15 % en poids à 40 % en poids, par rapport au copolymère greffé B (4) déshydraté.

11. Procédé selon l'une des revendications 1 à 10, **caractérisé en ce que** le copolymère greffé B (4) est à base d'un copolymère acrylate-styrène-acrylonitrile ou d'un polybutadiène.

12. Procédé selon l'une des revendications 1 à 11, **caractérisé en ce que** le copolymère greffé B (4) séché obtenu dans l'étape c) est à base d'un copolymère acrylate-styrène-acrylonitrile (ASA) et présente une teneur en eau dans la plage de 0,05 à 0,6 % en poids, une teneur totale en styrène inférieure à 500 ppm et une teneur totale en acrylonitrile inférieure à 100 ppm, dans chaque cas par rapport au copolymère greffé B séché, ou **en ce que** le copolymère greffé B (4) séché obtenu dans l'étape c) est à base d'un polybutadiène (ABS) et présente une teneur en eau dans la plage de 0,05 à 0,8 % en poids et une teneur totale en styrène inférieure ou égale à 2 000 ppm, dans chaque cas par rapport au copolymère greffé B (4) séché.

13. Procédé selon l'une des revendications 1 à 12, **caractérisé en ce que** le copolymère greffé B (4) séché obtenu dans l'étape c) est soumis à un refroidissement.
